# EUROPEAN PATENT APPLICATION

(11) **EP 3 778 231 A1**
(43) Date of publication of application: **17.02.2021**
(21) Application number: 19776629.8
(22) Date of filing: 26.03.2019
(51) Int. Cl.: B32B 27/32, B65D 65/40

(54) **LAMINATE, AND PACKAGING MATERIAL, PACKAGING BAG AND STAND-UP POUCH EACH COMPRISING SAID LAMINATE, AND MULTI-LAYER SUBSTRATE**

(30) Priority: 26.03.2018 JP 2018058403; 26.03.2018 JP 2018058411; 26.03.2018 JP 2018058422; 26.03.2018 JP 2018058416; 27.04.2018 JP 2018087181; 27.04.2018 JP 2018087200; 28.09.2018 JP 2018185982; 28.09.2018 JP 2018186164
(71) Applicant: Dai Nippon Printing Co., Ltd., Tokyo 162-8001 (JP)
(72) Inventor: YAMADA Kenichi, Tokyo 162-8001 (JP); SUZUKI Yoshihiko, Tokyo 162-8001 (JP); TAO Tomomi, Tokyo 162-8001 (JP); YONEMOTO Tomohiro, Tokyo 162-8001 (JP)
(74) Representative: Müller-Boré & Partner Patentanwälte PartG mbB
(86) International application number: PCT/JP2019/012708
(87) International publication number: WO 2019/189092

(57) **Abstract**

[Problem] Provided is a laminate which has sufficient strength and heat-resistance to be used as a packaging material or the like and which can be formed into a packaging material having excellent recyclability.

[Solution] A laminate according to the present invention is characterized by including at least a substrate and a heat-sealing polyethylene layer, wherein the substrate and the heat seal layer are composed of the same material, the substrate is treated by stretching, and the above-mentioned same material is polyethylene.

## Description

### BACKGROUND OF THE INVENTION

### Field of the Invention

The present invention relates to: a laminate; a packaging material, packaging bag, and stand-up pouch which are each composed of the laminate; and a multilayer substrate.

### Background Art

A packaging material and the like are conventionally produced using a resin film composed of a resin material. For example, a resin film composed of polyethylene has excellent heat-sealing properties as well as suitable flexibility and transparency, and thus, is widely used for packaging materials.

A resin film composed of polyethylene is usually less favorable in terms of strength and heat-resistance, consequently failing to be usable for a substrate. Such a resin film is pasted to, for example, a resin film composed of polyester, polyamide, or the like. Therefore, a usual packaging material or the like is composed of a laminated film including a substrate and a heat seal layer that are composed of different kinds of resin materials (for example, Patent Literature 1)

In recent years, voices demanding the creation of a recycling-oriented society have been mounting, accompanied by a demand for a highly recyclable packaging material. However, a conventional packaging product is composed of different kinds of resin materials as above-mentioned, making it difficult to separate the resin materials one by one, and thus, is not recycled under the current situation.

### Citation List

### Patent Literature

Patent Literature 1: JP 2009-202519A

### SUMMARY OF THE INVENTION

### Technical Problem

The present inventors have acquired the discovery that a polyethylene conventionally used as a heat seal layer can be markedly improved in strength and heat-resistance by stretching treatment and thus be used as a substrate, and that using the substrate laminated together with a heat seal layer composed of polyethylene makes it possible to produce a packaging material or the like which has sufficient strength and heat-resistance and is recyclable.

The present invention has been made in view of the discovery, and a problem to be solved by the present invention is to provide a laminate which has sufficient strength and heat-resistance to be used as a packaging material or the like and which can be formed into a packaging material having excellent recyclability.

Another problem to be solved by the present invention is to provide a packaging material composed of the laminate.

Another problem to be solved by the present invention is to provide a packaging bag produced from the laminate.

Another problem to be solved by the present invention is to provide a stand-up pouch produced from the laminate.

Yet another problem to be solved by the present invention is to provide a multilayer substrate that can be used to produce the laminate.

### Solution to Problem

A laminate according to the present invention includes at least a substrate and a heat-sealing polyethylene layer,
wherein the substrate and the heat seal layer are composed of the same material,
the substrate is a material treated by stretching, and
the above-mentioned same material is polyethylene.

In one embodiment, the substrate includes an evaporated film on at least one face thereof.

In one embodiment, the laminate according to the present invention includes an adhesive layer between the substrate and the heat seal layer.

In one embodiment, the substrate includes an aluminium-evaporated film and
the laminate includes, between the substrate and the heat seal layer, an adhesive layer composed of a cured product of a resin composition containing a polyester polyol, an isocyanate compound, and a phosphoric acid-modified compound.

In one embodiment, at least one of the substrate and the heat seal layer contains a biomass-derived polyethylene.

In one embodiment, an amount of polyethylene contained in the whole laminate is 90 mass% or more.

In one embodiment, the laminate according to the present invention is used for a packaging material(s).

A packaging material according to the present invention is produced using the laminate.

A packaging bag according to the present invention is produced using the laminate, wherein the heat seal layer has a thickness of 20 µm or more and 60 µm or less.

A stand-up pouch according to the present invention is produced using the laminate, wherein the heat seal layer has a thickness of 50 µm or more and 200 µm or less,

A multilayer substrate according to the present invention is composed of a five-layer coextruded stretched film including: a high-density polyethylene layer; a medium-density polyethylene layer; a low-density polyethylene layer, linear low-density polyethylene layer, or very-low-density polyethylene layer; a medium-density polyethylene layer; and a high-density polyethylene layer.

In one embodiment, the high-density polyethylene layer has a thickness of 1 µm or more and 20 µm or less.

In one embodiment, the medium-density polyethylene layer has a thickness of 1 µm or more and 30 µm or less.

In one embodiment, the low-density polyethylene layer, the linear low-density polyethylene layer, or the very-low-density polyethylene layer has a thickness of 1 µm or more and 10 µm or less.

A multilayer substrate according to the present invention is composed of a seven-layer coextruded stretched film including: a high-density polyethylene layer; a medium-density polyethylene layer; a blend resin layer of a high-density polyethylene and a medium-density polyethylene; a low-density polyethylene layer, linear low-density polyethylene layer, or very-low-density polyethylene layer; a medium-density polyethylene layer; a blend resin layer of a high-density polyethylene and a medium-density polyethylene; and a high-density polyethylene layer.

### Effects of Invention

The present invention can provide a laminate which has sufficient strength and heat-resistance to be used as a packaging material or the like and which can be formed into a packaging material having excellent recyclability.

In addition, the present invention can provide a packaging material composed of the laminate.

In addition, the present invention can provide a packaging bag produced from the laminate.

In addition, the present invention can provide a stand-up pouch produced from the laminate.

Furthermore, the present invention can provide a multilayer substrate that can be used to produce the laminate.

### BRIEF DESCRIPTION OF THE DRAWINGS

FIG. 1 is a schematic cross-sectional view depicting an embodiment of a laminate according to the present invention.
FIG. 2 is a schematic cross-sectional view depicting an embodiment of a laminate according to the present invention.
FIG. 3 is a schematic cross-sectional view depicting an embodiment of a laminate according to the present invention.
FIG. 4 is a schematic cross-sectional view depicting an embodiment of a multilayer substrate according to the present invention.
FIG. 5 is a perspective view depicting an embodiment of a packaging material produced using a laminate according to the present invention.
FIG. 6 is a perspective view depicting an embodiment of a packaging material produced using a laminate according to the present invention,

### DETAILED DESCRIPTION OF THE INVENTION

It is a schematic cross-sectional view depicting an embodiment of a laminate.

### <Laminate>

A laminate according to the present invention will be described with reference to the drawings.

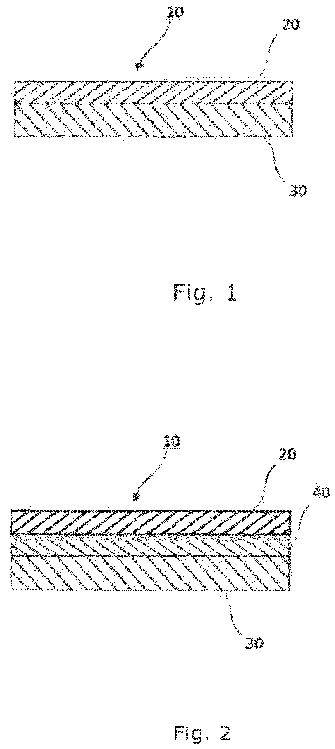

As depicted in FIG. 1, a laminate 10 includes at least a substrate 20 and a heat seal layer 30.

In one embodiment, the laminate 10 includes an interlayer 40 between the substrate 20 and the heat seal layer 30, as depicted in FIG. 2.

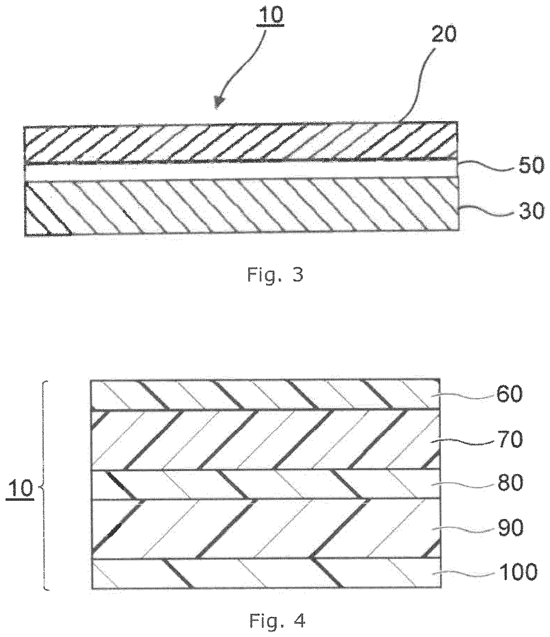

Furthermore, the laminate 10 includes an adhesive layer 50 between any layers, for example, between the substrate 20 and the heat seal 30, as depicted in FIG. 3.

In a laminate according to the present invention, the amount of polyethylene is preferably 90 mass% or more.

Allowing the amount of polyethylene contained in the whole laminate according to the present invention to be 90 mass% or more makes it possible to enhance the recyclability of the laminate according to the present invention.

In this regard, the amount of polyethylene contained in the laminate means the content ratio of polyethylene to the total of the amounts of the resin materials contained in the layers included in the laminate.

Below, each layer included in the laminate will be described.

### <Substrate >

The substrate is treated by stretching, and this stretching treatment may be uniaxial stretching or biaxial stretching, and is preferably biaxial stretching in terms of strength.

The stretch ratio of the substrate in the machine direction (MD) is preferably 2 or more and 10 or less, preferably 3 or more and 7 or less.

Allowing the stretch ratio in the machine direction (MD) to be 2 or more makes it possible to enhance the strength and heat-resistance of a laminate according to the present invention. Furthermore, the stretch ratio can enhance the printability for the substrate. In addition, the stretch ratio can enhance the transparency of the substrate, thus making it possible to enhance the visibility of an image formed on the heat seal layer side face of the substrate. The upper limit of the stretch ratio in the machine direction (MD) is not limited to any particular value, and is preferably 10 or less in terms of the breaking limit of the substrate.

The stretch ratio of the substrate in the transverse direction (TD) is preferably 2 or more and 10 or less, preferably 3 or more and 7 or less.

Allowing the stretch ratio in the transverse direction (TD) to be 2 or more makes it possible to enhance the strength and heat-resistance of a laminate according to the present invention. Furthermore, the stretch ratio can enhance the printability of the substrate. In addition, the stretch ratio can enhance the transparency of the substrate, thus making it possible to enhance the visibility of an image formed on the heat seal layer side face of the substrate. The upper limit of the stretch ratio in the transverse direction (TD) is not limited to any particular value, and is preferably 10 or less in terms of the breaking limit of the stretched polyethylene film.

The substrate is composed of the same material as the heat seal layer, and this can enhance the recyclability of the laminate. Examples of polyethylenes that can be used include a high-density polyethylene (HDPE), medium-density polyethylene (MDPE), low-density polyethylene (LDPE), linear low-density polyethylene (LLDPE), and very-low-density polyethylene (VLDPE).

Here, a usable high-density polyethylene is a polyethylene having a density of 0.945 g/cm³ or more, a usable medium-density polyethylene is a polyethylene having a density of 0.925 g/cm³ or more and less than 0.945 g/cm³, a usable low-density polyethylene is a polyethylene having a density of 0.900 g/cm³ or more and less than 0.925 g/cm³, a usable linear low-density polyethylene is a polyethylene having a density of 0.900 g/cm³ or more and less than 0.925 g/cm³, and a usable very-low-density polyethylene is a polyethylene having a density of less than 0.900 g/cm³.

Among these, a high-density polyethylene and a medium-density polyethylene are preferable in terms of the printability, strength, and heat-resistance of a laminate according to the present invention and the stretchability of the film, and a medium-density polyethylene is more preferable in terms of the stretchability.

These polyethylenes different in density and branching can be obtained through selecting a polymerization method suitably. For example, any method of gas phase polymerization, slurry polymerization, solution polymerization, and high-pressure ion polymerization is preferably carried out in a single stage or a multistage including two or more stages using a multisite catalyst such as a Ziegier-Natta catalyst or a singlesite catalyst such as a metallocene catalyst as a polymerization catalyst.

The singlesite catalyst is a catalyst capable of forming a uniform active species, and is usually prepared by bringing a metallocene-based transition metal compound or non-metallocene-based transition metal compound in contact with a co-catalyst for activation. The singlesite catalyst has a uniform active-site structure compared with the multisite catalyst, thus can provide a polymer having a structure with a high molecular weight and a high uniformity, and accordingly, is preferable. A metallocene-based catalyst in particular is preferably used as a singlesite catalyst. The metallocene-based catalyst is a catalyst containing: a transition metal compound that belongs to Group IV of the periodic table and contains a ligand having a cyclopentadienyl backbone; a co-catalyst; an organometallic compound, if necessary; and the catalytic components of a carrier.

In the transition metal compound that belongs to Group IV of the periodic table and contains a ligand having a cyclopentadienyl backbone, the cyclopentadienyl backbone is a cyclopentadienyl group, substituted cyclopentadienyl group, or the like. The substituted cyclopentadienyl group has at least one substituent selected from a C₁₋₃₀ hydrocarbon group, silyl group, silyl-substituted alkyl group, silyl-substituted aryl group, cyano group, cyanoalkyl group, cyanoaryl group, halogen group, haloalkyl group, halosilyl group, and the like. The substituted cyclopentadienyl group may have two or more substituents, and the substituents may be bonded to each other to form a ring, for example, an indenyl ring, fluorenyl ring, or azulenyl ring, or a hydrogenerated product thereof. The rings formed with substituents bonded to each other may further have a substituent.

In the transition metal compound that belongs to Group IV of the periodic table and contains a ligand having a cyclopentadienyl backbone, the transition metal is, for example, zirconium, titanium, hafnium, or the like, particularly preferably zirconium or hafnium. The transition metal compound usually has two ligands having a cyclopentadienyl backbone, and the ligands having a cyclopentadienyl backbone are preferably bonded to each other via a cross-linking group. In this regard, examples of cross-linking groups include: a C₁₋₄ alkylene group; a silylene group; a substituted silylene group such as a dialkylsilylene group or diarylsilylene group; and a substituted germylene group such as a dialkylgermylene group or diarylgermylene group. A substituted silylene group is preferable. The transition metal compounds that each belong to Group IV of the periodic table and contain a ligand having a cyclopentadienyl backbone can be used singly or in mixture of two or more kinds thereof as a catalytic component.

A co-catalyst refers to that which enables the transition metal compound of Group IV of the periodic table to be effective as a polymerization catalyst or which can equilibrate catalytically activated ionic charges. Examples of co-catalysts include: benzene-soluble aluminoxanes of organoaluminium oxy compounds, and benzene-insoluble organoaluminium oxy compounds; ion-exchanging sheet silicate; boron compounds; ionic compounds composed of a cation containing or not containing an active hydrogen group and an uncoordinated anion; lanthanoid salts such as lanthanum oxide; tin oxide; phenoxy compounds containing a fluoro group; and the like.

The transition metal compounds that each belong to Group IV of the periodic table and contain a ligand having a cyclopentadienyl backbone may be used supported by a carrier of an organic or inorganic compound when used. The carrier is preferably a porous oxide of an inorganic or organic compound, and specific examples thereof include: ion-exchanging sheet silicate such as montmorillonite; SiO₂, Al₂O₃, MgO, ZrO₂, TiO₂, B₂O₃, CaO, ZnO, BaO, ThO₂, and the like; and mixtures thereof. Furthermore, examples of organometallic compounds to be used as necessary include organoaluminium compounds, organic magnesium compounds, organic zinc compounds, and the like. Among these, organoaluminiums are suitably used.

In addition, a copolymer of ethylene and another monomer can be used to the extent that the characteristics of the present invention are not impaired. Examples of ethylene copolymers include copolymers of ethylene and a C₃₋₂₀ α-olefin, and examples of C₃₋₂₀ α-olefins include propylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, 6-methyl-1-heptene, and the like. Alternatively, a copolymer with vinyl acetate, acrylate, or the like may be used to the extent that the object of the present invention is not impaired.

In the present invention, a raw material to be used to obtain the high-density polyethylene or the like may be a biomass-derived ethylene instead of an ethylene obtained from fossil fuel. Such a biomass-derived polyethylene is a carbon-neutral material, and thus, can be formed into a packaging material causing a still smaller environmental burden.

Biomass-derived ethylene can be obtained by using a microorganism such as yeast to ferment a sugar liquid or starch obtained from a plant such as sugar cane, corn, or sweet potatoes and thus produce bio-ethanol, and heating this bio-ethanol in the presence of a catalyst.

Such a biomass-derived polyethylene can be produced, for example, by a method described in JP 2013-177531A. Alternatively, a commercially available biomass-derived polyethylene (for example, GREEN PE and the like available from Braskem S.A.) may be used.

The amount of polyethylene contained in the substrate is preferably 50 mass% or more, more preferably 70 mass% or more.

The stretched polyethylene film can contain an additive to the extent that the characteristics of the present invention are not impaired, and examples thereof include cross-linking agents, antioxidants, antiblocking agents, lubricants (slip agents), ultraviolet absorbers, light stabilizers, fillers, reinforcing agents, antistatistic agents, pigments, modifier resins, and the like.

In one embodiment, a substrate that can be used is a material having a structure including a layer composed of a high-density polyethylene (hereinafter referred to as a high-density polyethylene layer) and a layer composed of a medium-density polyethylene (hereinafter referred to as a medium-density polyethylene layer).

Including a high-density polyethylene layer as the outer side of the substrate makes it possible to further enhance the strength and heat-resistance of a laminate according to the present invention. In addition, including a medium-density polyethylene layer makes it possible to further enhance the stretchability of the substrate.

For example, the substrate has a structure composed of a coextruded film having a high-density polyethylene layer and a medium-density polyethylene layer in this order from the outer side.

Having such a structure makes it possible to enhance the stretchability of the film. In addition, such a structure makes it possible to enhance the strength and heat-resistance of a laminate according to the present invention.

In this regard, the thickness of the high-density polyethylene layer is preferably smaller than that of the medium-density polyethylene layer.

The ratio of the thickness of the high-density polyethylene layer to that of the medium-density polyethylene layer is preferably 1/10 or more and 1/1 or less, more preferably 1/5 or more and 1/2 or less.

Allowing the ratio of the thickness of the high-density polyethylene layer to that of the medium-density polyethylene layer to be 1/10 or more makes it possible to further enhance the strength and heat-resistance of a laminate according to the present invention. In addition, allowing the ratio of the thickness of the high-density polyethylene layer to that of the medium-density polyethylene layer to be 1/1 or less makes it possible to further enhance the stretchability of the substrate.

Alternatively, the structure can be, for example, that which is composed of a three-layer coextruded film including a high-density polyethylene layer, a medium-density polyethylene layer, and a high-density polyethylene layer in this order from the outer side.

Having such a structure makes it possible to further enhance the stretchability of the substrate. In addition, such a structure makes it possible to further enhance the strength and heat-resistance of a laminate according to the present invention. Furthermore, such a structure can prevent the substrate from causing a curl.

In this regard, the thickness of the high-density polyethylene layer is preferably smaller than that of the medium-density polyethylene layer.

The ratio of the thickness of the high-density polyethylene layer to that of the medium-density polyethylene layer is preferably 1/10 or more and 1/1 or less, more preferably 1/5 or more and 1/2 or less.

Allowing the ratio of the thickness of the high-density polyethylene layer to that of the medium-density polyethylene layer to be 1/10 or more makes it possible to further enhance the strength and heat-resistance of a laminate according to the present invention. In addition, allowing the ratio of the thickness of the high-density polyethylene layer to that of the medium-density polyethylene layer to be 1/1 or less makes it possible to further enhance the stretchability of the substrate.

Alternatively, as shown in FIG. 4, the structure can be, for example, that which is composed of a five-layer coextruded film including: a high-density polyethylene layer 60; a medium-density polyethylene layer 70; a low-density polyethylene layer, linear low-density polyethylene layer, or very-low-density polyethylene layer 80 (in the present paragraph, collectively referred to as a low-density polyethylene layer for simplicity of description); a medium-density polyethylene layer 90; and a high-density polyethylene layer 100, in this order from the outer side.

Such a structure makes it possible to enhance the stretchability of the substrate. In addition, such a structure makes it possible to enhance the strength and heat-resistance of a laminate according to the present invention. In addition, such a structure can prevent the substrate from causing a curl.

Furthermore, such a structure can enhance the production efficiency of the substrate, as below-mentioned.

In this regard, the thickness of the high-density polyethylene layer is preferably smaller than that of the medium-density polyethylene layer.

The ratio of the thickness of the high-density polyethylene layer to that of the medium-density polyethylene layer is preferably 1/10 or more and 1/1 or less, more preferably 1/5 or more and 1/2 or less.

Allowing the ratio of the thickness of the high-density polyethylene layer to that of the medium-density polyethylene layer to be 1/10 or more makes it possible to enhance the strength and heat-resistance of a laminate according to the present invention. In addition, allowing the ratio of the thickness of the high-density polyethylene layer to that of the medium-density polyethylene layer to be 1/1 or less makes it possible to enhance the stretchability of the substrate.

In addition, the thickness of the high-density polyethylene layer is preferably equal to that of the low-density polyethylene layer or larger than that of the low-density polyethylene.

The ratio of the thickness of the high-density polyethylene layer to that of the low-density polyethylene layer is preferably 1/0.25 or more and 1/2 or less, more preferably 1/0.5 or more and 1/1 or less.

Allowing the ratio of the thickness of the high-density polyethylene layer to that of the low-density polyethylene layer to be 1/0.25 or more makes it possible to enhance the heat-resistance. In addition, allowing the ratio of the thickness of the high-density polyethylene layer to that of the low-density polyethylene layer to be 1/1 or less makes it possible to enhance the adhesion between the medium-density polyethylene layers.

Each high-density polyethylene layer preferably has a thickness of 1 µm or more and 20 µm or less, more preferably 2 µm or more and 10 µm or less.

The high-density polyethylene layer having a thickness of 1 µm or more makes it possible to further enhance the strength and heat-resistance of a laminate according to the present invention. In addition, the high-density polyethylene layer having a thickness of 20 µm or less makes it possible to further enhance the processing suitability of a laminate according to the present invention.

Each medium-density polyethylene layer preferably has a thickness of 1 µm or more and 30 µm or less, more preferably 5 µm or more and 20 µm or less.

The medium-density polyethylene layer having a thickness of 1 µm or more makes it possible to further enhance the stretchability of the film. In addition, the medium-density polyethylene layer having a thickness of 30 µm or less makes it possible to further enhance the processing suitability of a laminate according to the present invention.

The low-density polyethylene layer preferably has a thickness of 1 µm or more and 10 µm or less, more preferably 2 µm or more and 5 µm or less.

The low-density polyethylene layer having a thickness of 1 µm or more makes it possible to further enhance the adhesion between the high-density polyethylene layer and the medium-density polyethylene layer. In addition, the low-density polyethylene layer having a thickness of 5 µm or less makes it possible to further enhance the processing suitability of a laminate according to the present invention.

In one embodiment, a substrate having such a structure can be produced, for example, by an inflation method.

Specifically, such a substrate can be produced by allowing a high-density polyethylene, a medium-density polyethylene layer, and a low-density polyethylene layer, linear low-density polyethylene layer, or very-low-density polyethylene layer in this order from the outer side to be coextruded in tubular form, and then, allowing the opposing low-density polyethylene layers, linear low-density polyethylene layers, or very-low-density polyethylene layers to be pressed to each other using a rubber roll or the like.

Production by such a method can markedly decrease the number of defective products in the production, and eventually can enhance the production efficiency.

In addition, stretching can be carried out together in an inflation film-forming machine, thus making it possible to further enhance the production efficiency.

In one embodiment, the structure can be that which is composed of a seven-layer coextruded film including: a high-density polyethylene layer; a blend resin layer of a high-density polyethylene and a medium-density polyethylene; a medium-density polyethylene layer; a low-density polyethylene layer, linear low-density polyethylene layer, or very-low-density polyethylene layer (in the present paragraph, collectively referred to as a low-density polyethylene layer for simplicity of description); a medium-density polyethylene layer; a blend resin layer of a high-density polyethylene and a medium-density polyethylene; and a high-density polyethylene layer in this order from the outer side.

Having such a structure makes it possible to enhance the adhesion between the high-density polyethylene layer and the medium-density polyethylene layer. In addition, such a structure makes it possible to enhance the processing suitability of a laminate according to the present invention.

Each high-density polyethylene layer preferably has a thickness of 1 µm or more and 20 µm or less, more preferably 2 µm or more and 10 µm or less. The high-density polyethylene layer having a thickness of 1 µm or more makes it possible to further enhance the strength and heat-resistance of a laminate according to the present invention. In addition, the high-density polyethylene layer having a thickness of 20 µm or less makes it possible to further enhance the processing suitability of a laminate according to the present invention.

Each blend resin layer of a high-density polyethylene and a medium-density polyethylene preferably has a thickness of 1 µm or more and 20 µm or less, more preferably 2 µm or more and 10 µm or less. This makes it possible to enhance the adhesion between the high-density polyethylene layer and the medium-density polyethylene layer. In addition, such a structure makes it possible to enhance the processing suitability of a laminate according to the present invention.

The blending ratio of the high-density polyethylene to the medium-density polyethylene in the blend resin layer is preferably 1:9 to 9:1 by mass, more preferably 3:7 to 7:3. This makes it possible to enhance the adhesion between the high-density polyethylene layer and the medium-density polyethylene layer. In addition, such a structure makes it possible to enhance the processing suitability of a laminate according to the present invention.

The low-density polyethylene layer preferably has a thickness of 1 µm or more and 30 µm or less, more preferably 5 µm or more and 20 µm or less. The medium-density polyethylene layer having a thickness of 1 µm or more makes it possible to further enhance the stretchability of the film. In addition, the medium-density polyethylene layer having a thickness of 30 µm or less makes it possible to further enhance the processing suitability of a laminate according to the present invention.

The low-density polyethylene layer preferably has a thickness of 1 µm or more and 10 µm or less, more preferably 2 µm or more and 5 µm or less.

The low-density polyethylene layer having a thickness of 1 µm or more makes it possible to further enhance the adhesion between the high-density polyethylene layer and the medium-density polyethylene layer. In addition, the substrate interlayer having a thickness of 5 µm or less makes it possible to further enhance the processing suitability of a laminate according to the present invention.

In one embodiment, a stretched polyethylene film having such a structure can be produced by the above-mentioned inflation method.

Production by such a method can markedly decrease the number of defective products in the production, and eventually can enhance the production efficiency.

In addition, stretching can be carried out together in an inflation film-forming machine, thus making it possible to further enhance the production efficiency.

In addition, the substrate is preferably surface-treated. This makes it possible to enhance the adhesion to an adjacent layer.

The surface-treatment is not limited to any particular method, and examples thereof include: physical treatments such as corona discharge treatment, ozonation, low temperature plasma treatment using oxygen gas and/or nitrogen gas, and the like, and glow discharge treatment; and chemical treatments such as oxidation using a chemical agent.

In addition, an anchor coat layer may be formed on the surface of the substratel using a conventionally known anchor coat agent.

The substrate preferably has a thickness of 9 µm or more and 50 µm or less, more preferably 12 µm or more and 30 µm or less. The substrate having a thickness within this value range makes it possible to further enhance the printability, strength, and heat-resistance of the substrate.

In one embodiment, the substrate includes, on one face thereof, an evaporated film containing; a metal such as aluminium; or an inorganic oxide such as aluminium oxide, silicon oxide, magnesium oxide, calcium oxide, zirconium oxide, titanium oxide, boron oxide, hafnium oxide, barium oxide, or the like. This makes it possible to enhance the gas barrier properties of a laminate according to the present invention.

Among the above-mentioned materials, aluminium oxide has higher transparency, does not decrease the visibility of an image formed on the substrate, and has excellent gas barrier properties, and thus, is preferably used to form an evaporated film.

A conventionally known method can be adopted as an evaporation method, and examples thereof include: physical vapor deposition (PVD) methods such as a vacuum evaporation method, sputtering method, and ion plating method; chemical vapor deposition (CVD) methods such as a plasma chemical vapor deposition method, thermochemical vapor deposition method, and photochemical vapor deposition method; and the like.

In addition, the evaporated film preferably has a film thickness of 0.002 µm or more and 0.4 µm or less, more preferably 0.005 µm or more and 0.1 µm or less. The evaporated film having a thickness within this value range makes it possible to maintain the gas barrier properties and at the same time, prevent the evaporated film from generating cracks and the like.

Another film that can be used is, for example, a composite film composed of two or more evaporated film layers of different kinds of inorganic oxides, in which the film is formed using both of a physical vapor deposition method and a chemical vapor deposition method in combination. The degree of vacuum in an evaporation chamber is preferably approximately 10⁻² to 10⁻⁸ mbar, particularly approximately 10⁻³ to 10⁻⁷ mbar, before introduction of oxygen, and preferably approximately 10⁻¹ to 10⁻⁶ mbar, particularly approximately 10⁻² to 10⁻⁵ mbar, after introduction of oxygen. In this regard, the amount of oxygen to be introduced and the like vary depending on, for example, the size of an evaporation machine. With the oxygen to be introduced, an inert gas such as argon gas, helium gas, or nitrogen gas may be used as a carrier gas to the extent that the carrier gas does not cause any hindrance. The conveyance speed of the film is preferably approximately 10 to 800 m/minute, particularly approximately 50 to 600 m/minute,

The substrate may have an image, such as a letter, pattern, or sign, formed on the surface thereof. In order that the image can be prevented from deteriorating over time, the image is preferably formed on that side of the substrate on which a heat seal layer is laminated.

Such an image is not limited to any particular forming method, and examples thereof include a conventionally known printing method such as a gravure printing method, off-set printing method, or flexographic printing method. Among these, a flexographic printing method is preferable in terms of the environmental burden.

In cases where an image is formed on that side of the substrate on which a heat seal layer is laminated, the substrate preferably has a haze value of 20% or less, more preferably 10% or less. This makes it possible to enhance the visibility of the formed image. The haze value of the substrate can be adjusted by, for example, changing the stretch ratio. In this regard, such a haze value in the present invention can be measured in accordance with JIS K-7105.

The substrate can be obtained by melting a resin material containing polyethylene, forming the material into a film by a melt-extrusion molding method such as an inflation molding method or T-die molding method, and then stretching the resulting film. An inflation molding method enables stretching treatment to be carried out more easily, and thus, is preferably used for the production. The substrate having a multilayer structure can be produced by melt-coextruding a plurality of resin materials.

In cases where the substrate is produced by a T-die method, the polyethylene preferably has an MFR of 3 g/10 minutes or more and 20 g/10 minutes or less.

The polyethylene having an MFR of 3 g/10 minutes or more makes it possible to enhance the processing suitability of a laminate according to the present invention. In addition, the polyethylene having an MFR of 20 g/10 minutes or less makes it possible to prevent the resin film from being broken.

In cases where the substrate is produced by an inflation method, the polyethylene preferably has an MFR of 0.5 g/10 minutes or more and 5 g/10 minutes or less.

The polyethylene having an MFR of 0.5 g/10 minutes or more makes it possible to enhance the processing suitability of a laminate according to the present invention. In addition, the polyethylene having an MFR of 5 g/10 minutes or less makes it possible to enhance the film-forming properties.

### <Heat Seal Layer>

The heat seal layer is composed of the same material as the substrate, in other words, polyethylene, and contains at least one of a high-density polyethylene (HDPE), medium-density polyethylene (MDPE), low-density polyethylene (LDPE), linear low-density polyethylene (LLDPE), and copolymer of ethylene and another monomer.

Among these, a low-density polyethylene (LDPE) and a linear low-density polyethylene (LLDPE) are preferable in terms of heat-sealing properties. These polyethylenes are preferably biomass-derived in terms of the environmental burden.

The heat seal layer is formed of an unstretched polyethylene film, or formed by melt-extruding polyethylene.

The polyethylene to be formed into a heat seal layer is preferably a low-density polyethylene (LDPE), linear low-density polyethylene (LLDPE), and very-low-density polyethylene (VLDPE) in terms of heat-sealing properties.

A copolymer of ethylene and another monomer can be used to the extent that the characteristics of the present invention are not impaired.

In addition, a biomass-derived polyethylene or a recycled polyethylene is preferable in terms of the environmental burden.

The amount of polyethylene contained in the heat seal layer is preferably 50 mass% or more, more preferably 70 mass% or more.

The heat-sealing polyethylene layer can contain an additive to the extent that the characteristics of the present invention are not impaired, and examples thereof include cross-linking agents, antioxidants, ultraviolet absorbers, light stabilizers, fillers, reinforcing agents, antistatistic agents, pigments, modifier resins, and the like.

In one embodiment, the heat seal layer has a multilayer structure, and includes, as an interlayer, a layer containing at least one of a medium-density polyethylene and a high-density polyethylene.

Specifically, the structure can be composed of; a layer containing at least one of a low-density polyethylene, linear low-density polyethylene, and very-low-density polyethylene; a layer containing at least one of a medium-density polyethylene and high-density polyethylene; and a layer containing at least one of a low-density polyethylene, linear low-density polyethylene, and very-low-density polyethylene.

Having such a structure makes it possible to maintain the heat-sealing properties and at the same time, further enhance the bag-making suitability and strength of a laminate according to the present invention.

In another embodiment, the heat seal layer can have a structure composed of; a layer containing at least one of a low-density polyethylene, linear low-density polyethylene, and very-low-density polyethylene/a layer containing biomass-derived polyethylene/a layer containing at least one of a low-density polyethylene, linear low-density polyethylene, and very-low-density polyethylene.

Having such a structure makes it possible to further decrease the environmental burden of a packaging material or the like produced using a laminate according to the present invention.

The thickness of the heat seal layer is preferably changed as appropriate in accordance with the weight of the contents to be packaged in a packaging material produced using a laminate according to the present invention.

For example, in cases where a packaging bag 20, shown in FIG. 4, for packaging 1-g or more and 200-g or less contents is produced, the heat seal layer preferably has a thickness of 20 µm or more and 60 µm or less.

The heat seal layer having a thickness of 20 µm or more makes it possible to prevent the packaged contents from leaking due to the breakage of the heat seal layer. In addition, the heat seal layer having a thickness of 60 µm or less makes it possible to enhance the processing suitability of a laminate according to the present invention.

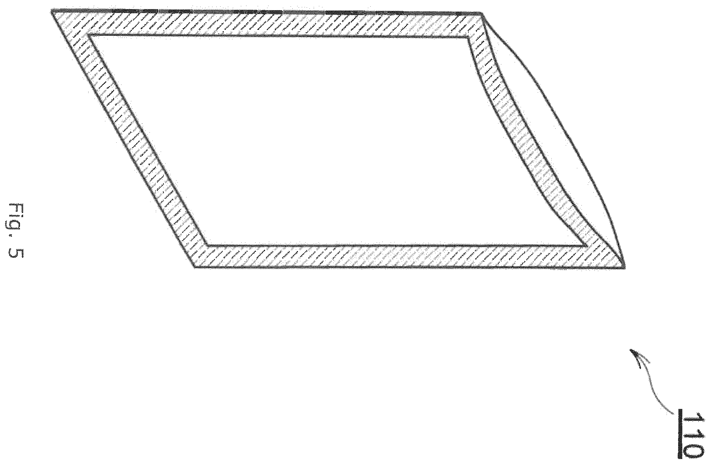

For example, in cases where a stand-up pouch 30, shown in FIG. 5, for packaging 50-g or more and 2000-g or less contents is produced, the heat seal layer preferably has a thickness of 50 µm or more and 200 µm or less.

The heat seal layer having a thickness of 50 µm or more makes it possible to prevent the packaged contents from leaking due to the breakage of the heat seal layer. In addition, the heat seal layer having a thickness of 200 µm or less makes it possible to enhance the processing suitability of a laminate according to the present invention.

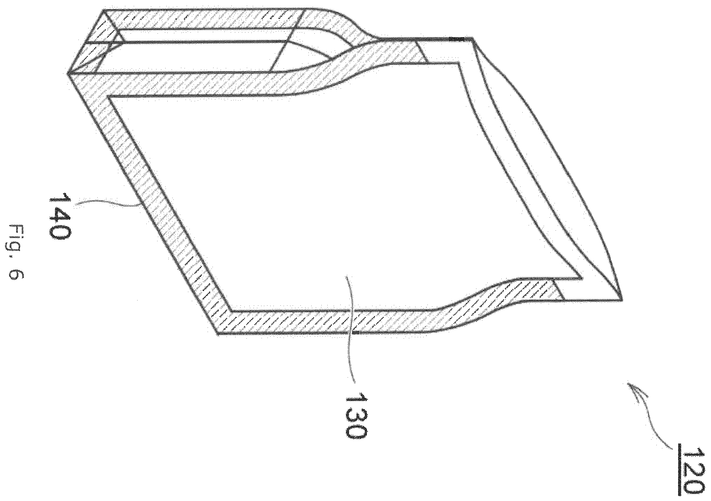

In this regard, the hatched-line-shaded portions in FIGs. 5 and 6 are heat-sealed portions.

A heat seal layer can be formed by forming a resin material containing polyethylene into a film by a melt-extrusion molding method such as inflation molding or T-die molding to produce a polyethylene film, and then, laminating the resulting film, via the below-mentioned adhesive layer, on a substrate or a polyethylene layer including an evaporated film.

Alternatively, a heat seal layer can be formed by extruding a resin material containing polyethylene onto a substrate or a polyethylene layer including an evaporated film, and then, drying the extruded material.

### <Interlayer>

In one embodiment, a laminate according to the present invention includes an interlayer between the substrate and the heat seal layer

In one embodiment, the interlayer includes a polyethylene film treated by stretching. This makes it possible to enhance the strength and heat-resistance of the laminate. The stretching may be uniaxial stretching or biaxial stretching.

The stretch ratio of the polyethylene film in the machine direction (MD) is preferably 2 or more and 10 or less, preferably 3 or more and 7 or less.

Allowing the stretch ratio of the polyethylene film in the machine direction (MD) to be 2 or more makes it possible to enhance the strength and heat-resistance of a laminate according to the present invention. The upper limit of the stretch ratio of the polyethylene film in the machine direction (MD) is not limited to any particular value, and is preferably 10 or less in terms of the breaking limit of the polyethylene film,

In addition, the stretch ratio of the polyethylene film in the transverse direction (TD) is preferably 2 or more and 10 or less, preferably 3 or more and 7 or less.

Allowing the stretch ratio of the polyethylene film in the transverse direction (TD) to be 2 or more makes it possible to enhance the strength and heat-resistance of a laminate according to the present invention. The upper limit of the stretch ratio of the polyethylene film in the transverse direction (TD) is not limited to any particular value, and is preferably 10 or less in terms of the breaking limit of the polyethylene film.

As a polyethylene contained in the polyethylene film, a high-density polyethylene and a medium-density polyethylene are preferable among the above-mentioned materials in terms of the strength and heat-resistance and in terms of the stretchability of the film, and a medium-density polyethylene is more preferable in terms of the stretchability. In addition, the polyethylene film may have the above-mentioned multilayer structure in the same manner as the substrate.

The polyethylene film can contain the additive to the extent that the characteristics of the present invention are not impaired.

The polyethylene film preferably has a thickness of 9 µm) or more and 50 µm or less, more preferably 12 µm or more and 30 µm or less.

The polyethylene film having a thickness of 9 µm or more makes it possible to further enhance the strength and heat-resistance of a laminate according to the present invention. In addition, the polyethylene film having a thickness of 50 µm or less makes it possible to enhance the processing suitability of a laminate according to the present invention.

A polyethylene film to be used may be produced by the T-die method or inflation method, or is commercially available.

In one embodiment, the polyethylene film includes an evaporated film on at least one face thereof. This makes it possible to enhance the gas barrier properties of a laminate according to the present invention.

The evaporated film preferably has a thickness of 0.002 µm or more and 0.4 µm or less, more preferably 0.005 µm or more and 0.1 µm or less. The evaporated film having a thickness within this value range makes it possible to maintain the gas barrier properties and at the same time, prevent the evaporated film from generating cracks and the like.

The polyethylene film may have an image formed on the surface thereof. The method of forming an image is as above-mentioned.

### <Adhesive Layer>

A polyethylene laminate for packaging materials according to the present invention can include an adhesive layer between any layers.

Such an adhesive layer contains at least one adhesive, which may be any adhesive of a one-component curable type, a two-component curable type, or a non-curable type. In addition, the adhesive may be a solventless type adhesive or a solvent type adhesive, and a solventless type adhesive can preferably be used in terms of the environmental burden.

Examples of solventless type adhesives include polyether-based adhesives, polyester-based adhesives, silicone-based adhesives, epoxy-based adhesives, urethane-based adhesives, and the like, and among these, a two-component curable type urethane-based adhesive can preferably be used.

Examples of solvent type adhesives include rubber-based adhesives, vinyl-based adhesives, silicone-based adhesives, epoxy-based adhesives, phenol-based adhesives, olefin-based adhesives, and the like.

In addition, in cases where an adhesive layer is provided so as to be adjacent to an evaporated film which is an aluminium-evaporated film, the adhesive layer is preferably composed of a cured product of a resin composition containing a polyester polyol, an isocyanate compound, and a phosphoric acid-modified compound.

In cases where the laminate including an evaporated film is used for packaging materials, the laminate undergoes a bending load caused by a molding machine or the like, undesirably causing the aluminium-evaporated film to generate a crack or the like. Use of such a specific adhesive as above-mentioned makes it possible to inhibit a decrease in the oxygen barrier properties and water vapor barrier properties even if the aluminium-evaporated film generates a crack,

A polyester polyol has two or more hydroxyl groups as functional groups in one molecule. In addition, an isocyanate compound has two or more isocyanate groups as functional groups in one molecule.

A polyester polyol has, for example, a polyester structure or a polyester polyurethane structure as the main backbone.

Specific examples of usable resin compositions containing a polyester polyol, isocyanate compound, and phosphoric acid-modified compound include the PASLIM series available from DIC Corporation.

The resin composition may further contain a sheet-like inorganic compound, a coupling agent, cyclodextrin and/or a derivative thereof.

Examples of usable polyester polyols having two or more hydroxyl groups as functional groups in one molecule include the following [first example] to [third example],
[First example] polyester polyol obtained by polycondensation between ortho-oriented multivalent carboxylic acid or anhydride thereof and multivalent alcohol
[Second example] polyester polyol having glycerol backbone
[Third example] polyester polyol having isocyanuric ring Below, each polyester polyol will be described.

A polyester polyol according to the first example is a polycondensate obtained by allowing a multivalent carboxylic acid component containing at least one or more of ortho-phthalic acids and anhydrides thereof to be polycondensed with a multivalent alcohol component containing at least one selected from the group consisting of ethylene glycol, propylene glycol, butylene glycol, neopentyl glycol, and cyclohexane dimethanol.

In particular, a polyester polyol in which the content ratio of an ortho-phthalic acid and an anhydride thereof to the whole multivalent carboxylic acid component is 70 to 100 mass% is preferable.

For a polyester polyol according to the first example, an ortho-phthalic acid and an anhydride thereof is essential as a multivalent carboxylic acid component, and may be copolymerized with another multivalent carboxylic acid component to the extent that the effects of the present embodiment are not impaired.

Specific examples include: aliphatic multivalent carboxylic acids such as succinic acid, adipic acid, azelaic acid, sebacic acid, and dodecanedicarboxylic acid; unsaturated bond-containing multivalent carboxylic acids such as maleic anhydride, maleic acid, and fumaric acid; alicyclic multivalent carboxylic acids such as 1,3-cyclopentanedicarboxylic acid and 1,4-cyclohexanedicarboxylic acid; aromatic multivalent carboxylic acids such as terephthalic acid, isophthalic acid, pyromellitic acid, trimellitic acid, 1,4-naphthalenedicarboxylic acid, 2,5-naphthalenedicarboxylic acid, 2,6-naphthalenedicarboxylic acid, naphthalic acid, biphenyldicarboxylic acid, 1,2-bis(phenoxy)ethane-p,p'-dicarboxylic acid, anhydrides of these dicarboxylic acids, and ester-forming derivatives of these dicarboxylic acids; polybasic acids such as p-hydroxybenzoic acid, p-(2-hydroxyethoxy)benzoic acid, and ester-forming derivatives of these hydroxycarboxylic acids; and the like. Among these, succinic acid, 1,3-cyclopentanedicarboxylic acid, and isophthalic acid are preferable.

In this regard, two or more of the other multivalent carboxylic acids may be used.

Examples of polyester polyols according to the second example include a polyester polyol having a glycerol backbone represented by the general formula (1).

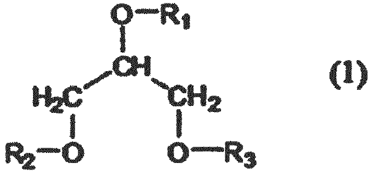

In the general formula (1), R1, R2, R3 are each independently H (a hydrogen atom) or a group represented by the below-mentioned general formula (2).

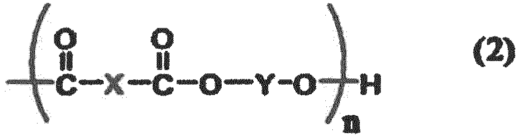

In the formula (2), n represents an integer of 1 to 5; X represents an arylene group that is selected from the group consisting of a 1,2-phenylene group, 1,2-naphthylene group, 2,3-naphthylene group, 2,3-anthraquinonediyl group, and 2,3-anthracenediyl group, and may have a substituent; and Y represents a C₂₋₆ alkylene group.

However, at least one of R1, R2, and R3 represents a group represented by the general formula (2).

In the general formula (1), at least one of R1, R2, and R3 needs to be a group represented by the general formula (2). Among these, all of R1, R2, and R3 are each preferably a group represented by the general formula (2).

In addition, any two or more compounds of: the compounds wherein any one of R1, R2, and R3 is a group represented by the general formula (2); the compounds wherein any two of R1, R2, and R3 are each a group represented by the general formula (2); and the compounds wherein all of R1, R2, and R3 are each a group represented by the general formula (2) may be in the form of a mixture.

X represents an arylene group that is selected from the group consisting of a 1,2-phenylene group, 1,2-naphthylene group, 2,3-naphthylene group, 2,3-anthraquinonediyl group, and 2,3-anthracenediyl group, and that may have a substituent.

In cases where X is substituted with a substituent, X may be substituted with one or more substituents, and the substituent(s) is/are each bonded to any carbon atom on X, wherein the carbon atom is different from a free radical. Examples of such substituents include a chloro group, bromo group, methyl group, ethyl group, i-propyl group, hydroxyl group, methoxy group, ethoxy group, phenoxy group, methylthio group, phenylthio group, cyano group, nitro group, amino group, phthalimide group, carboxyl group, carbamoyl group, N-ethylcarbamoyl group, phenyl group, naphthyl group, and the like.

In the general formula (2), Y represents a C₂₋₆ alkylene group such as an ethylene group, propylene group, butylene group, neopentylene group, 1,5-pentylene group, 3-methyl-1,5-pentylene group, 1,6-hexylene group, methylpentylene group, and dimethylbutylene group. Y is preferably a propylene group and an ethylene group among others, most preferably an ethylene group.

A polyester resin compound having a glycerol backbone represented by the general formula (1) can be synthesized by allowing glycerol to react with an aromatic multivalent carboxylic acid the carboxylic acid of which is substituted to the ortho position, or an anhydride thereof, and a multivalent alcohol component, wherein these reactants are essential components.

Examples of aromatic multivalent carboxylic acids the carboxylic acid of which is substituted to the ortho position, or anhydrides thereof, include ortho-phthalic acids or anhydrides thereof, naphthalene 2,3-dicarboxylic acids or anhydrides thereof, naphthalene 1,2-dicarboxylic acids or anhydrides thereof, anthraquinone 2,3-dicarboxylic acids or anhydrides thereof, and 2,3-anthracene carboxylic acids or anhydrides thereof.

These compounds may have a substituent on any carbon atom of the aromatic ring. Examples of such substituents include a chloro group, bromo group, methyl group, ethyl group, i-propyl group, hydroxyl group, methoxy group, ethoxy group, phenoxy group, methylthio group, phenylthio group, cyano group, nitro group, amino group, phthalimide group, carboxyl group, carbamoyl group, N-ethylcarbamoyl group, phenyl group, naphthyl group, and the like.

In addition, examples of multivalent alcohol components include C₂₋₆ alkylenediols. Examples thereof include diols such as ethylene glycol, propylene glycol, butylene glycol, neopentyl glycol, 1,5-pentanediol, 3-methyl-1,5-pentanediol, 1,6-hexanediol, methylpentanediol, and dimethylbutanediol.

A polyester polyol according to the third example is a polyester polyol having an isocyanuric ring represented by the following general formula (3).

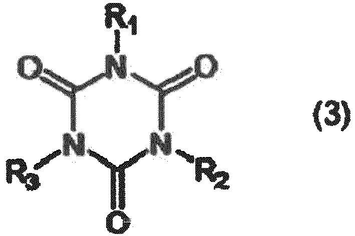

In the general formula (3), R1, R2, and R3 each independently represent "-(CH₂)n1-OH wherein n1 represents an integer of 2 to 4" or a structure of the general formula (4).

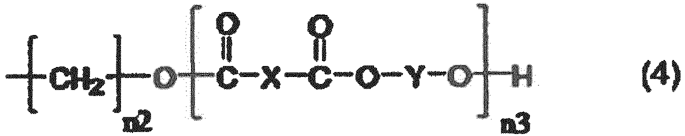

In the general formula (4), n2 represents an integer of 2 to 4; n3 represents an integer of 1 to 5; X represents an arylene group that is selected from the group consisting of a 1,2-phenylene group, 1,2-naphthylene group, 2,3-naphthyiene group, 2,3-anthraquinonediyl group, and 2,3-anthracenediyl group, and that may have a substituent; and Y represents a C₂₋₆ alkylene group. However, at least one of R1, R2, and R3 is a group represented by the general formula (4).

In the general formula (3), an alkylene group represented by -(CH₂)n1- may be linear or branched. n1 is preferably 2 or 3 among others, most preferably 2.

In the general formula (4), n2 represents an integer of 2 to 4, and n3 represents an integer of 1 to 5.

X represents an arylene group that is selected from the group consisting of a 1,2-phenylene group, 1,2-naphthylene group, 2,3-naphthylene group, 2,3-anthraquinonediyl group, and 2,3-anthracenediyl group, and that may have a substituent.

In cases where X is substituted with a substituent, X may be substituted with one or more substituents, and the substituent(s) is/are each bonded to any carbon atom on X, wherein the carbon atom is different from a free radical. Examples of such substituents include a chloro group, bromo group, methyl group, ethyl group, i-propyl group, hydroxyl group, methoxy group, ethoxy group, phenoxy group, methylthio group, phenylthio group, cyano group, nitro group, amino group, phthalimide group, carboxyl group, carbamoyl group, N-ethylcarbamoyl group, phenyl group, naphthyl group, and the like.

A substituent for X is preferably a hydroxyl group, cyano group, nitro group, amino group, phthalimide group, carbamoyl group, N-ethylcarbamoyl group, and phenyl group among others, most preferably a hydroxyl group, phenoxy group, cyano group, nitro group, phthalimide group, and phenyl group.

In the general formula (4), Y represents a C₁₋₆ alkylene group such as an ethylene group, propylene group, butylene group, neopentylene group, 1,5-pentylene group, 3-methyl-1,5-pentylene group, 1,6-hexylene group, methylpentylene group, and dimethylbutylene group. Y is preferably a propylene group and an ethylene group among others, most preferably an ethylene group.

In the general formula (3), at least one of R1, R2, and R3 is a group represented by the general formula (4). Among these, all of R1, R2, and R3 are each preferably a group represented by the general formula (4).

In addition, any two or more compounds of: the compounds wherein any one of R1, R2, and R3 is a group represented by the general formula (4); the compounds wherein any two of R1, R2, and R3 are each a group represented by the general formula (4); and the compounds wherein all of R1, R2, and R3 are each a group represented by the general formula (4) may be in the form of a mixture,

A polyester polyol having an isocyanuric ring represented by the general formula (3) can be synthesized by allowing a triol having an isocyanuric ring to react with an aromatic multivalent carboxylic acid the carboxylic acid of which is substituted to the ortho position, or an anhydride thereof, and a multivalent alcohol component, wherein these reactants are essential components.

Examples of triols having an isocyanuric ring include alkylene oxide adducts of isocyanuric acid such as 1,3,5-tris(2-hydroxyethyl)isocyanuric acid and 1,3,5-tris(2-hydroxypropyl)isocyanuric acid.

In addition, examples of aromatic multivalent carboxylic acids the carboxylic acid of which is substituted to the ortho position, or anhydrides thereof, include ortho-phthalic acids or anhydrides thereof, naphthalene 2,3-dicarboxylic acids or anhydrides thereof, naphthalene 1,2-dicarboxylic acids or anhydrides thereof, anthraquinone 2,3-dicarboxylic acids or anhydrides thereof, and 2,3-anthracene carboxylic acids or anhydrides thereof. These compounds may have a substituent on any carbon atom of the aromatic ring.

Examples of such substituents include a chloro group, bromo group, methyl group, ethyl group, i-propyl group, hydroxyl group, methoxy group, ethoxy group, phenoxy group, methylthio group, phenylthio group, cyano group, nitro group, amino group, phthalimide group, carboxyl group, carbamoyl group, N-ethylcarbamoyl group, phenyl group, naphthyl group, and the like.

In addition, examples of multivalent alcohol components include C₂₋₆ alkylenediols. Examples thereof include diols such as ethylene glycol, propylene glycol, butylene glycol, neopentyl glycol, 1,5-pentanediol, 3-methyl-1,5-pentanediol, 1,6-hexanediol, methylpentanediol, and dimethylbutanediol.

Among others, a polyester polyol compound having an isocyanuric ring-wherein 1,3,5-tris(2-hydroxyethyl)isocyanuric acid or 1,3,5-tris(2-hydroxypropyl)isocyanuric acid is used as a triol compound having an isocyanuric ring; an ortho-phthalic acid anhydride is used as an aromatic multivalent carboxylic acid the carboxylic acid of which is substituted to the ortho position, or an anhydride thereof; and ethylene glycol is used as a multivalent alcohol-has particularly excellent oxygen barrier properties and adhesiveness, and is preferable.

An isocyanuric ring has high polarity, is trifunctional, can enhance the polarity of the whole system, and can enhance the cross-linking density. From such a viewpoint, 5 mass% or more of isocyanuric ring is preferably contained with respect to the whole adhesive resin solid content.

An isocyanate compound has two or more isocyanate groups in one molecule.

In addition, an isocyanate compound may be aromatic or aliphatic, and may be a low-molecular-weight compound or a high-molecular-weight compound.

Furthermore, such an isocyanate compound may be a blocked isocyanate compound obtained through addition reaction by a conventionally known suitable method using a known isocyanate blocking agent.

Among others, a polyisocyanate compound having three or more isocyanate groups is preferable in terms of adhesiveness and retort resistance, and the compound is preferably aromatic in terms of oxygen barrier properties and water vapor barrier properties.

Specific examples of isocyanate compounds include: tetramethylene diisocyanate, hexamethylene diisocyanate, toluene diisocyanate, diphenylmethane diisocyanate, hydrogenated diphenylmethane diisocyanate, metaxylylene diisocyanate, hydrogenated xylylene diisocyanate, isophorone diisocyanate, and trimers of these isocyanate compounds; and adducts, biurets, and allophanates obtained by allowing an isocyanate compound to react with a low-molecular-weight active hydrogen compound or an alkylene oxide adduct thereof or a high-molecular-weight active hydrogen compound.

Examples of low-molecular-weight active hydrogen compounds include ethylene glycol, propylene glycol, metaxylylene alcohol, 1,3-bishydroxyethylbenzene, 1,4-bishydroxyethylbenzene, trimethylolpropane, glycerol, pentaerythritol, erythritol, sorbitol, ethylenediamine, monoethanolamine, diethanolamine, triethanolamine, metaxylylenediamine, and the like, and examples of molecule active hydrogen compounds include high-molecular-weight active hydrogen compounds of various polyester resins, polyether polyols, and polyamides; and the like.

A phosphoric acid-modified compound is a compound represented, for example, by the following general formula (5) or (6).

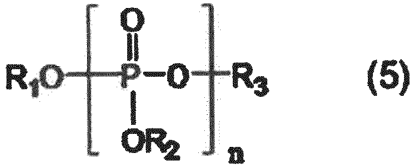

In the general formula (5), R1, R2, and R3 are each a group selected from a hydrogen atom, C₁₋₃₀ alkyl group, (meth)acryloyl group, phenyl group optionally having a substituent, and C₁₋₄ alkyl group having a (meth)acryloyloxy group, and at least one of R1, R2, and R3 is a hydrogen atom, and n represents an integer of 1 to 4, 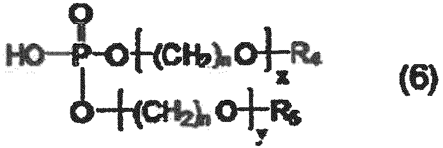 R4 and R5 are each a group selected from a hydrogen atom, C₁₋₃₀ alkyl group, (meth)acryloyl group, phenyl group optionally having a substituent, and C₁₋₄ alkyl group having a (meth)acryloyloxy group; n represents an integer of 1 to 4; x represents an integer of 0 to 30; y represents an integer of 0 to 30; and there is no case where both x and y are 0.

More specific examples include phosphoric acid, pyrophoric acid, triphosphoric acid, methyl acid phosphate, ethyl acid phosphate, butyl acid phosphate, dibutyl phosphate, 2-ethylhexyl acid phosphate, bis(2-ethylhexyl) phosphate, isododecyl acid phosphate, butoxyethyl acid phosphate, oleyl acid phosphate, tetracosyl acid phosphate, 2-hydroxyethyl methacrylate acid phosphate, and polyoxyethylene alkyl ether phosphoric acid, and one or more of these can be used.

The amount of phosphoric acid-modified compound contained in the resin composition is preferably 0.005 mass% or more and 10 mass% or less, more preferably 0.01 mass% or more and 1 mass% or less.

Allowing the amount of phosphoric acid-modified compound to be 0.005 mass% or more makes it possible to enhance the oxygen barrier properties and water vapor barrier properties of a laminate according to the present invention. In addition, allowing the amount of phosphoric acid-modified compound to be 10 mass% or less makes it possible to enhance the adhesiveness of the adhesive layer.

The resin composition containing a polyester polyol, isocyanate compound, and phosphoric acid-modified compound may contain a sheet-like inorganic compound, thus making it possible to enhance the adhesiveness of the adhesive layer. In addition, such a composition makes it possible to enhance the bending load resistance of a laminate according to the present invention.

Examples of sheet-like inorganic compounds include the kaolinite-serpentine group clay minerals (halloysite, kaolinite, hydrohalloysite, dickite, nacrite, antigorite, chrysotile, and the like), the pyrophyllite-talc group (pyrophyllite, talc, kerolite, and the like), and the like.

Examples of coupling agents include silane-based coupling agents, titanium-based coupling agents, aluminium-based coupling agents, and the like, represented by the following general formula (7). In this regard, these coupling agents may be used singly or in combination of two or more kinds thereof.

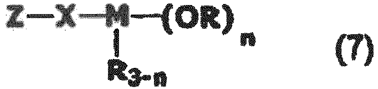

Examples of silane-based coupling agents include vinyltrichlorosilane, vinyltrimethoxysilane, vinyltriethoxysilane, β-(3,4-epoxycyclohexyl) ethyltrimethoxysilane, γ-glycidoxypropyltrimethoxysilane, γ-glycidoxypropylmethyldiethoxysilane, γ-glycidoxypropyltriethoxysilane, γ-methacryloxytrimethoxysilane, γ-methacryloxypropylmethyldimethoxysilane, γ-methacryloxypropyltrimethoxysilane, γ-methacryloxypropylmethyldiethoxysilane, γ-methacryloxypropyltriethoxysilane, N-β(aminoethyl)γ-aminopropylmethyldimethoxysilane, N-β(aminoethyl)γ-aminopropyltrimethoxysilane, N-β(aminoethyl)γ-aminopropyltriethoxysilane, γ-aminopropyltrimethoxysilane, γ-aminopropyltriethoxysilane, N-phenyl-γ-aminopropyltrimethoxysilane, γ-chloropropyltrimethoxysilane, γ-mercaptopropyltrimethoxysilane, 3-isocyanatepropyltriethoxysilane, 3-acryloxypropyltrimethoxysilane, 3-triethoxysilyl-N-(1,3-dimethyl-butylidene), and the like.

Examples of titanium-based coupling agents include isopropyltriisostearoyl titanate, isopropyitri(N-aminoethyl-aminoethyl) titanate, isopropyltridodecylbenzenesulfonyl titanate, isopropyltris(dioctylpyrophosphate) titanate, tetraoctylbis(didodecylphosphite) titanate, tetraoctylbis(ditridecylphosphite) titanate, bis(dioctylpyrophosphate) oxyacetate titanate, bis(dioctylpyrophosphate)ethylene titanate, isopropyltrioctanoyl titanate, isopropyldimethacrylisostearoyl titanate, isopropylisostearoyldiacryl titanate, diisostearoylethylene titanate, isopropyltri(dioctylphosphate) titanate, isopropyltricumylphenyl titanate, dicumylphenyloxyacetate titanate, and the like.

Specific examples of aluminium-based coupling agents include acetoalkoxyaluminiumdiisopropylate, diisopropoxyaluminiumethylacetoacetate, diisopropoxyaluminiummonomethacrylate, isopropoxyaluminiumalkylacetoacetatemono(dioctylphosphate), aluminium-2-ethylhexanoate oxide trimer, aluminiumstearate oxide trimer, alkylacetoacetate aluminium oxide trimer, and the like.

The resin composition can contain cyclodextrin and/or a derivative thereof, thus making it possible to enhance the adhesiveness of the adhesive layer. In addition, such a composition makes it possible to further enhance the bending load resistance of a laminate according to the present invention.

Specific examples of such compounds that can be used include: cyclodextrins; compounds in which the hydrogen atom of a hydroxyl group of a glucose unit of a cyclodextrin is substituted with another functional group, examples of which include an alkylated cyclodextrin, acetylated cyclodextrin, or hydroxy alkylated cyclodextrin; and the like. Alternatively, a branched cyclic dextrin can be used.

In addition, the cyclodextrin backbone in a cyclodextrin and a cyclodextrin derivative may be any of an α-cyclodextrin composed of six glucose units, a β-cyciodexthn composed of seven glucose units, and a γ-cyclodextrin composed of eight glucose units.

These compounds may be used singly or in combination of two or more kinds thereof. Hereinafter, these cyclodextrins and/or derivatives thereof are collectively referred to as dextrin compounds in some cases.

Such a cyclodextrin compound to be used is preferably a cyclodextrin derivative in terms of the compatibility with and dispersibility in the resin composition.

Examples of alkylated cyclodextrins include a methyl-α-cyclodextrin, methyl-β-cyclodextrin, methyl-γ-cyclodextrin, and the like. These compounds may be used singly or in combination of two or more kinds thereof.

Examples of acetylated cyclodextrins include a monoacetyl-α-cyclodextrin, monoacetyl-β-cyclodextrin, monoacetyl-γ-cyclodextrin, and the like. These compounds may be used singly or in combination of two or more kinds thereof.

Examples of hydroxyalkylated cyclodextrins include a hydroxypropyl-α-cyclodextrin, hydroxypropyl-β-cyclodextrin, hydroxypropyl-γ-cyclodextrin, and the like. These compounds may be used singly or in combination of two or more kinds thereof.

The adhesive layer preferably has a thickness of 0.5 µm or more and 6 µm or less, more preferably 0.8 µm or more and 5 µm or less, still more preferably 1 µm or more and 4.5 µm or less.

The adhesive layer having a thickness of 0.5 µm or more makes it possible to enhance the adhesiveness of the adhesive layer. In addition, allowing an adhesive layer composed of a cured product of a resin composition containing a polyester polyol, isocyanate compound, and phosphoric acid-modified compound to be provided so as to be adjacent to an aluminium-evaporated film makes it possible to enhance the bending load resistance of the laminate.

The adhesive layer having a thickness of 6 µm or less makes it possible to enhance the processing suitability of the laminate.

The adhesive layer can be formed, for example, by applying and drying a material on the substrate and the like using a conventionally known method such as a direct gravure roll coat method, gravure roll coat method, kiss coat method, reverse roll coat method, fountain method, and transfer roll coat method.

### <Applications>

A laminate according to the present invention can suitably be used for packaging materials in particular.

Without particular limitation, such a packaging material may be a packaging bag 110 as depicted in FIG. 5 or may be a stand-up pouch 120 including a body portion 130 and a bottom portion 140 as depicted in FIG. 6. In such a stand-up pouch, only the body portion may be formed of the above-mentioned laminate, only the bottom portion may be formed of the above-mentioned laminate, or both the body portion and the bottom portion may be formed of the above-mentioned laminate.

A packaging bag can be produced by folding the above-mentioned laminate in two with the heat seal layer inside and heat-sealing the end of the folded laminate.

Alternatively, a packaging bag can be produced by superposing two sheets of the laminate one on the other with the heat seal layers facing each other and heat-sealing the end of the superposed laminates.

A stand-up pouch can be produced by heat-sealing the laminate(s) into cylindrical shape with the heat seal layer(s) inside to form a body portion, then folding another laminate in V-shape with the heat seal layer inside, putting the same in one end of the body portion inside, and heat-sealing the end to form a bottom portion.

Heat-sealing is not limited to any particular method, and can be carried out, for example, by a known method such as bar sealing, revolving roll sealing, belt sealing, inpulse sealing, high-frequency sealing, or ultrasonic sealing,

The contents to be packaged in a packaging material are not limited to any particular item, and the contents may be liquid, powder, or gel. The contents may also be food or non-food.

After the contents are packaged, the opening is heat-sealed so that the resulting item can be a packaged item.

### EXAMPLES

The present invention will be described more specifically with reference to Examples, and the present invention is not limited to these Examples.

### <Example 1-1>

A medium-density polyethylene (density: 0.941 g/cm³; melting point: 129°C; MFR: 1.3 g/10 minutes; tradename: Elite 5538G; manufactured by The Dow Chemical Company) was formed into a film by an inflation molding method to obtain a polyethylene film having a thickness of 100 µm.

This polyethylene film was stretched at a stretch ratio of 5 in the machine direction (MD) to obtain a stretched polyethylene film as a substrate having a thickness of 20 µm. The stretched polyethylene film was measured for the haze value in accordance with JIS K-7105, and the value was 6.5%

The stretched polyethylene film and an unstretched linear low-density polyethylene (LLDPE) film (heat seal layer; tradename: L6100; manufactured by Toyobo Co., Ltd.) having a thickness of 40 µm were laminated via a two-component curable urethane-based adhesive (tradename: RU-77T/H-7; manufactured by Rock Paint Co., Ltd.) to obtain a laminate according to the present invention.

### <Example 1-2>

A high-density polyethylene (density: 0.961 g/cm³; melting point: 135°C; MFR: 0.7 g/10 minutes; tradename: HTA108; manufactured by Exxon Mobil Corporation) and a medium-density polyethylene (density: 0.941 g/cm³; melting point: 129°C; MFR: 1.3 g/10 minutes; tradename: Elite 5538G; manufactured by The Dow Chemical Company) were formed into a film by an inflation molding method to produce a polyethylene film composed of a high-density polyethylene layer, a medium-density polyethylene layer, and a high-density polyethylene layer. The high-density polyethylene layers each had a thickness of 20 µm, and the medium-density polyethylene layer had a thickness of 60 µm.

This polyethylene film was stretched at a stretch ratio of 5 in the machine direction (MD) to obtain a stretched polyethylene film as a substrate having a thickness of 20 µm, The stretched polyethylene film had a haze value of 8.9%.

The stretched polyethylene film and an unstretched linear low-density polyethylene (LLDPE) film (heat seal layer; tradename: L6100; manufactured by Toyobo Co., Ltd.) having a thickness of 40 µm were laminated via a two-component curable urethane-based adhesive (tradename: RU-77T/H-7; manufactured by Rock Paint Co., Ltd.) to obtain a laminate according to the present invention.

### <Example 1-3>

A medium-density polyethylene (density: 0.941 g/cm³; melting point: 129°C; MFR: 1.3 g/10 minutes; tradename: Elite 5538G; manufactured by The Dow Chemical Company) was formed into a film by an inflation molding method to obtain a polyethylene film having a thickness of 100 µm.

This polyethylene film was stretched at a stretch ratio of 2.24 in the machine direction (MD) and in the transverse direction (TD) to obtain a stretched polyethylene film as a substrate having a thickness of 20 µm. The stretched polyethylene film was measured for the haze value in accordance with JIS K-7105, and the value was 5.1%.

The stretched polyethylene film and an unstretched linear low-density polyethylene (LLDPE) film (heat seal layer; tradename: L6100; manufactured by Toyobo Co., Ltd.) having a thickness of 40 µm were laminated via a two-component curable urethane-based adhesive (tradename: RU-77T/H-7; manufactured by Rock Paint Co., Ltd.) to obtain a laminate according to the present invention.

### <Comparative Example 1-1>

A medium-density polyethylene (density: 0.941 g/cm³; melting point: 129°C; MFR: 1.3 g/10 minutes; tradename: Elite 5538G; manufactured by The Dow Chemical Company) was formed into a film by an inflation molding method to obtain a polyethylene film as a substrate having a thickness of 20 µm. The polyethylene film was measured for the haze value in accordance with JIS K-7105, and the value was 23.5%.

The polyethylene film and an unstretched linear low-density polyethylene (LLDPE) film (heat seal layer; tradename: L6100; manufactured by Toyobo Co., Ltd.) having a thickness of 40 µm were laminated via a two-component curable urethane-based adhesive (tradename: RU-77T/H-7; manufactured by Rock Paint Co., Ltd.) to obtain a laminate.

### <Comparative Example 1-2>

A high-density polyethylene (density: 0.961 g/cm³; melting point: 135°C; MFR: 0.7 g/10 minutes; tradename: HTA108; manufactured by Exxon Mobil Corporation) and a medium-density polyethylene (density: 0.941 g/cm³; melting point: 129°C; MFR: 1.3 g/10 minutes; tradename: Elite 5538G; manufactured by The Dow Chemical Company) were formed into a film by an inflation molding method to produce a polyethylene film as a substrate composed of a high-density polyethylene layer, a medium-density polyethylene layer, and a high-density polyethylene layer. The high-density polyethylene layers each had a thickness of 4 µm, and the medium-density polyethylene layer had a thickness of 12 µm. The polyethylene film was measured for the haze value in accordance with JIS K-7105, and the value was 28.8%.

The polyethylene film and an unstretched linear low-density polyethylene (LLDPE) film (heat seal layer; tradename: L6100; manufactured by Toyobo Co., Ltd.) having a thickness of 40 µm were laminated via a two-component curable urethane-based adhesive (tradename: RU-77T/H-7; manufactured by Rock Paint Co., Ltd.) to obtain a laminate.

### <Evaluation of Printability>

An image was formed on one face of each of the stretched polyethylene films and the polyethylene films produced in the Examples and Comparative Examples by a flexographic printing method using a water flexographic ink (tradename: AQUA LIONA; manufactured by Toyo Ink Co., Ltd.). The formed images were visually observed, and the printability of the stretched polyethylene films and the polyethylene films were evaluated on the basis of the following rating criteria. The evaluation results are listed in Table 1.

### (Rating criteria)

○: the dimensional stability was good during printing, and the formed image was successfully good, generating no abrasion, bleeding, or the like.
×: the film underwent elongation and shrinkage during printing, and the formed image generated abrasion or bleeding.

### <Evaluation of Stiffness>

The stretched polyethylene films and polyethylene films produced in the Examples and Comparative Examples were formed into test pieces having a width of 15 mm, which were measured for stiffness using a loop stiffness measurement test machine (tradename: LOOP STIFFNESS TESTER; manufactured by Toyo Seiki Seisaku-sho, Ltd.). Here, the length of the loop was set to 60 mm. The measurement results are listed in Table 1.

### <Evaluation of Strength>

The stretched polyethylene films and polyethylene films produced in the Examples and Comparative Examples were formed into dumbbell-shaped test pieces having a width of 10 mm. These test pieces were measured for tensile strength in the MD direction using a tensile tester (RTC-1310A manufactured by Orientec Corporation). Here, the distance between the chucks was set to 10 mm, and the tensile speed was set to 300 mm/minute. The measurement results are listed in Table 1.

| Table 1 | Evaluation of Printability | Evaluation of Stiffness | Evaluation of Strength |
|---|---|---|---|
| Example 1-1 | ○ | 0.32 g | 35.0 N/10 mm |
| Example 1-2 | ○ | 0.45 g | 37.8 N/10 mm |
| Example 1-3 | ○ | 0.38 g | 36.9 N/10 mm |
| Comparative Example 1-1 | × | 0.09 g | 5.4 N/10 mm |
| Comparative Example 1-2 | × | 0.11 g | 6.5 N/10 mm |

### <Example 2-1>

A medium-density polyethylene (density: 0.941 g/cm³; melting point: 129°C; MFR: 1.3 g/10 minutes; tradename: Elite 5538G; manufactured by The Dow Chemical Company) was formed into a film by an inflation molding method to obtain a polyethylene film having a thickness of 100 µm.

This polyethylene film was stretched at a stretch ratio of 5 in the machine direction (MD) to obtain a stretched polyethylene film as a substrate having a thickness of 20 µm.

An evaporated film composed of aluminium oxide and having a thickness of 0.1 µm was formed on one face of the stretched polyethylene film by a vacuum evaporation method.

On the evaporated face of the stretched polyethylene film, an unstretched linear low-density polyethylene (LLDPE) film (heat seal layer; tradename: L6100; manufactured by Toyobo Co., Ltd.) having a thickness of 40 µm was laminated via a two-component curable urethane-based adhesive (tradename: RU-77T/H-7; manufactured by Rock Paint Co., Ltd.) to obtain a laminate according to the present invention.

### <Example 2-2>

A high-density polyethylene (density: 0.961 g/cm³; melting point: 135°C; MFR: 0.7 g/10 minutes; tradename: HTA108; manufactured by Exxon Mobil Corporation) and a medium-density polyethylene (density: 0.941 g/cm³; melting point: 129°C; MFR: 1.3 g/10 minutes; tradename: Elite 5538G; manufactured by The Dow Chemical Company) were formed into a film by an inflation molding method to produce a polyethylene film composed of a high-density polyethylene layer, a medium-density polyethylene layer, and a high-density polyethylene layer. The high-density polyethylene layers each had a thickness of 20 µm, and the medium-density polyethylene layer had a thickness of 60 µm.

This polyethylene film was stretched at a stretch ratio of 5 in the machine direction (MD) to obtain a stretched polyethylene film as a substrate having a thickness of 20 µm.

An evaporated film composed of aluminium oxide and having a thickness of 0.1 µm was formed on one face of the stretched polyethylene film by a vacuum evaporation method.

On the non-evaporated face of the stretched polyethylene film, an unstretched linear low-density polyethylene (LLDPE) film (heat seal layer; tradename: L6100; manufactured by Toyobo Co., Ltd.) having a thickness of 40 µm was laminated via a two-component curable urethane-based adhesive (tradename: RU-77T/H-7; manufactured by Rock Paint Co., Ltd.) to obtain a laminate according to the present invention.

### <Example 2-3>

A medium-density polyethylene (density: 0.941 g/cm³; melting point: 129°C; MFR: 1.3 g/10 minutes; tradename: Elite 5538G; manufactured by The Dow Chemical Company) was formed into a film by an inflation molding method to obtain two polyethylene films having a thickness of 100 µm.

The two polyethylene films were stretched at a stretch ratio of 5 in the machine direction (MD) to obtain stretched polyethylene films having a thickness of 20 µm.

An evaporated film composed of aluminium and having a thickness of 0.1 µm (interlayer) was formed on one face of one of the stretched polyethylene films by a vacuum evaporation method.

Then, on the evaporated face of this stretched polyethylene film having an evaporated film, another stretched polyethylene film as a substrate was laminated via a two-component curable urethane-based adhesive (tradename: RU-77T/H-7; manufactured by Rock Paint Co., Ltd.).

On the non-evaporated face of the stretched polyethylene film having an evaporated film, an unstretched linear low-density polyethylene (LLDPE) film (tradename: L6100; manufactured by Toyobo Co., Ltd.) having a thickness of 40 µm was laminated via a two-component curable urethane-based adhesive (heat seal layer; tradename: RU-77T/H-7; manufactured by Rock Paint Co., Ltd.) to obtain a laminate according to the present invention.

### <Example 2-4>

A medium-density polyethylene (density: 0.941 g/cm³; melting point: 129°C; MFR: 1.3 g/10 minutes; tradename: Elite 5538G; manufactured by The Dow Chemical Company) was formed into a film by an inflation molding method to obtain a polyethylene film having a thickness of 100 µm.

This polyethylene film was stretched at a stretch ratio of 2.24 in the machine direction (MD) and at a stretch ratio of 2.24 in the transverse direction (TD) to obtain a stretched polyethylene film as a substrate having a thickness of 20 µm.

An evaporated film composed of aluminium oxide and having a thickness of 0.1 µm was formed on one face of the stretched polyethylene film by a vacuum evaporation method.

On the evaporated face of the stretched polyethylene film, an unstretched linear low-density polyethylene (LLDPE) film (heat seal layer; tradename: L6100; manufactured by Toyobo Co., Ltd.) having a thickness of 40 µm was laminated via a two-component curable urethane-based adhesive (tradename: RU-77T/H-7; manufactured by Rock Paint Co., Ltd.) to obtain a laminate according to the present invention,

### <Comparative Example 2-1>

A medium-density polyethylene (density: 0.941 g/cm³; melting point: 129°C; MFR: 1.3 g/10 minutes; tradename: Elite 5538G; manufactured by The Dow Chemical Company) was formed into a film by an inflation molding method to obtain a polyethylene film as a substrate having a thickness of 20 µm.

An evaporated film composed of aluminium oxide and having a thickness of 0.1 µm was formed on one face of the polyethylene film by a vacuum evaporation method.

On the non-evaporated face of the polyethylene film, an unstretched linear low-density polyethylene (LLDPE) film (heat seal layer; tradename: L6100; manufactured by Toyobo Co., Ltd.) having a thickness of 40 µm was laminated via a two-component curable urethane-based adhesive (tradename: RU-77T/H-7; manufactured by Rock Paint Co., Ltd.) to obtain a laminate.

### <Comparative Example 2-2>

A high-density polyethylene (density: 0.961 g/cm³; melting point: 135°C; MFR: 0.7 g/10 minutes; tradename: HTA108; manufactured by Exxon Mobil Corporation) and a medium-density polyethylene (density: 0.941 g/cm³; melting point: 129°C; MFR: 1.3 g/10 minutes; tradename: Elite 5538G; manufactured by The Dow Chemical Company) were formed into a film by an inflation molding method to produce a polyethylene film as a substrate composed of a high-density polyethylene layer, a medium-density polyethylene layer, and a high-density polyethylene layer. The high-density polyethylene layers each had a thickness of 4 µm, and the medium-density polyethylene layer had a thickness of 12 µm.

An evaporated film composed of aluminium oxide and having a thickness of 0.1 µm was formed on one face of the polyethylene film by a vacuum evaporation method.

On the non-evaporated face of the polyethylene film, an unstretched linear low-density polyethylene (LLDPE) film (heat seal layer; tradename: L6100; manufactured by Toyobo Co., Ltd.) having a thickness of 40 µm was laminated via a two-component curable urethane-based adhesive (tradename: RU-77T/H-7; manufactured by Rock Paint Co., Ltd.) to obtain a laminate.

### <Comparative Example 2-3>

A medium-density polyethylene (density: 0.941 g/cm³; melting point: 129°C; MFR: 1.3 g/10 minutes; tradename: Elite 5538G; manufactured by The Dow Chemical Company) was formed into a film by an inflation molding method to obtain two polyethylene films having a thickness of 20 µm.

An evaporated film composed of aluminium and having a thickness of 0.1 µm was formed on one face of one of the polyethylene films by a vacuum evaporation method.

Then, on the evaporated face of this polyethylene film having the evaporated film, another polyethylene film was laminated via a two-component curable urethane-based adhesive (tradename: RU-77T/H-7; manufactured by Rock Paint Co., Ltd.).

On the non-evaporated face of the polyethylene film having an evaporated film, an unstretched linear low-density polyethylene (LLDPE) film (tradename: L6100; manufactured by Toyobo Co., Ltd.) having a thickness of 40 µm was laminated via a two-component curable urethane-based adhesive (tradename: RU-77T/H-7; manufactured by Rock Paint Co., Ltd.) to obtain a laminate.

### <Evaluation of Printability>

An image was formed on one face of each of the stretched polyethylene films and the polyethylene films produced in the Examples and Comparative Examples by a flexographic printing method using a water flexographic ink (tradename: AQUA LIONA; manufactured by Toyo Ink Co., Ltd.). The formed images were visually observed, and the printability of the stretched polyethylene films and the polyethylene films were evaluated on the basis of the following rating criteria. The evaluation results are listed in Table 2.

### (Rating criteria)

○: the dimensional stability was good during printing, and the formed image was successfully good, generating no abrasion, bleeding, or the like.
×: the film underwent elongation and shrinkage during printing, and the formed image generated abrasion or bleeding.

### <Evaluation of Stiffness>

The stretched polyethylene films and polyethylene films produced in the Examples and Comparative Examples were formed into test pieces having a width of 15 mm, which were measured for stiffness using a loop stiffness measurement test machine (tradename: LOOP STIFFNESS TESTER; manufactured by Toyo Seiki Seisaku-sho, Ltd.). Here, the length of the loop was set to 60 mm. The measurement results are listed in Table 2.

### <Evaluation of Strength>

The stretched polyethylene films and polyethylene films produced in the Examples and Comparative Examples were formed into dumbbell-shaped test pieces having a width of 10 mm. These test pieces were measured for tensile strength in the MD direction using a tensile tester (RTC-1310A manufactured by Orientec Corporation). Here, the distance between the chucks was set to 10 mm, and the tensile speed was set to 300 mm/minute. The measurement results are listed in Table 2.

### <Evaluation of Gas Barrier Properties>

The laminates produced in the Examples and Comparative Examples were measured for the water vapor transmission rate (g/m²·day) using a water vapor transmission rate analyzer (PERMATRAN) manufactured by Ametek MOCON, U.S.A. The measurement results are listed in Table 2.

| Table 2 | Evaluation of Printability | Evaluation of Stiffness | Evaluation of Strength | Gas Barrier ' Properties |
|---|---|---|---|---|
| Example 2-1 | ○ | 0.32 g | 35.0 N/10 mm | 1.4 |
| Example 2-2 | ○ | 0.45 g | 37.8 N/10 mm | 1.6 |
| Example 2-3 | ○ | 0.32 g | 35.0 N/10 mm | 1.4 |
| Example 2-4 | ○ | 0.38 g | 36.9 N/10 mm | 1.2 |
| Comparative Example 2-1 | × | 0.09 g | 5.4 N/10 mm | 5.5 |
| Comparative Example 2-2 | × | 0.11 g | 6.5 N/10 mm | 6.1 |

### <Example 3-1>

A medium-density polyethylene (density: 0.941 g/cm³; melting point: 129°C; MFR: 1.3 g/10 minutes; tradename: Elite 5538G; manufactured by The Dow Chemical Company) was formed into a film by an inflation molding method to obtain a polyethylene film having a thickness of 100 µm.

This polyethylene film was stretched at a stretch ratio of 5 in the machine direction (MD) to obtain a stretched polyethylene film as a substrate having a thickness of 20 µm.

The stretched polyethylene film and an unstretched linear low-density polyethylene (LLDPE) film (heat seal layer; tradename: L6100; manufactured by Toyobo Co., Ltd.) having a thickness of 40 µm were laminated via a two-component curable solventless polyester-based adhesive (tradename: RN-920/HN:920; manufactured by Rock Paint Co., Ltd.) to obtain a laminate according to the present invention.

### <Example 3-2>

A high-density polyethylene (density: 0.961 g/cm³; melting point: 135°C; MFR: 0.7 g/10 minutes; tradename: HTA108; manufactured by Exxon Mobil Corporation) and a medium-density polyethylene (density: 0.941 g/cm³; melting point: 129°C; MFR: 1.3 g/10 minutes; tradename: Elite 5538G; manufactured by The Dow Chemical Company) were formed into a film by an inflation molding method to produce a polyethylene film as a substrate composed of a high-density polyethylene layer, a medium-density polyethylene layer, and a high-density polyethylene layer. The high-density polyethylene layers each had a thickness of 20 µm, and the medium-density polyethylene layer had a thickness of 60 µm.

This polyethylene film was stretched at a stretch ratio of 5 in the machine direction (MD) to obtain a stretched polyethylene film having a thickness of 20 µm.

The stretched polyethylene film and an unstretched linear low-density polyethylene (LLDPE) film (heat seal layer; tradename: L6100; manufactured by Toyobo Co., Ltd.) having a thickness of 40 µm were laminated via a two-component curable solventless polyester-based adhesive (tradename: RN-920/HN:920; manufactured by Rock Paint Co., Ltd.) to obtain a laminate according to the present invention.

### <Example 3-3>

A medium-density polyethylene (density: 0.941 g/cm³; melting point: 129°C; MFR: 1.3 g/10 minutes; tradename: Elite 5538G; manufactured by The Dow Chemical Company) was formed into a film by an inflation molding method to obtain a polyethylene film having a thickness of 100 µm.

This polyethylene film was stretched at a stretch ratio of 2.24 in the machine direction (MD) and in the transverse direction (TD) to obtain a stretched polyethylene film as a substrate having a thickness of 20 µm.

The stretched polyethylene film and an unstretched linear low-density polyethylene (LLDPE) film (heat seal layer; tradename: L6100; manufactured by Toyobo Co., Ltd.) having a thickness of 40 µm were laminated via a two-component curable solventless polyester-based adhesive (tradename: RN-920/HN:920; manufactured by Rock Paint Co., Ltd.) to obtain a laminate according to the present invention.

### <Comparative Example 3-1>

A medium-density polyethylene (density: 0.941 g/cm³; melting point: 129°C; MFR: 1.3 g/10 minutes; tradename: Elite 5538G; manufactured by The Dow Chemical Company) was formed into a film by an inflation molding method to obtain a polyethylene film as a substrate having a thickness of 20 µm.

The polyethylene film and an unstretched linear low-density polyethylene (LLDPE) film (heat seal layer; tradename: L6100; manufactured by Toyobo Co., Ltd.) having a thickness of 40 µm were laminated via a two-component curable solventless polyester-based adhesive (tradename: RN-920/HN:920; manufactured by Rock Paint Co., Ltd.) to obtain a laminate.

### <Comparative Example 3-2>

A high-density polyethylene (density: 0.961 g/cm³; melting point: 135°C; MFR: 0.7 g/10 minutes; tradename: HTA108; manufactured by Exxon Mobil Corporation) and a medium-density polyethylene (density: 0.941 g/cm³; melting point: 129°C; MFR: 1.3 g/10 minutes; tradename: Elite 5538G; manufactured by The Dow Chemical Company) were formed into a film by an inflation molding method to produce a polyethylene film as a substrate composed of a high-density polyethylene layer/a medium-density polyethylene layer/a high-density polyethylene layer. The high-density polyethylene layers each had a thickness of 4 µm, and the medium-density polyethylene layer had a thickness of 12 µm.

The polyethylene film and an unstretched linear low-density polyethylene (LLDPE) film (heat seal layer; tradename: L6100; manufactured by Toyobo Co., Ltd.) having a thickness of 40 µm were laminated via a two-component curable solventless polyester-based adhesive (tradename: RN-920/HN:920; manufactured by Rock Paint Co., Ltd.) to obtain a laminate.

### <Evaluation of Printability>

An image was formed on one face of each of the stretched polyethylene films and the polyethylene films produced in the Examples and Comparative Examples by a flexographic printing method using a water flexographic ink (tradename: AQUA LIONA; manufactured by Toyo Ink Co., Ltd.). The formed images were visually observed, and the printability of the stretched polyethylene films and the polyethylene films were evaluated on the basis of the following rating criteria. The evaluation results are listed in Table 3.

### (Rating criteria)

○: the dimensional stability was good during printing, and the formed image was successfully good, generating no abrasion, bleeding, or the like.
×: the film underwent elongation and shrinkage during printing, and the formed image generated abrasion or bleeding.

### <Evaluation of Stiffness>

The stretched polyethylene films and polyethylene films produced in the Examples and Comparative Examples were formed into test pieces having a width of 15 mm, which were measured for stiffness using a loop stiffness measurement test machine (tradename: LOOP STIFFNESS TESTER; manufactured by Toyo Seiki Seisaku-sho, Ltd.). Here, the length of the loop was set to 60 mm. The measurement results are listed in Table 3.

### <Evaluation of Strength>

The stretched polyethylene films and polyethylene films produced in the Examples and Comparative Examples were formed into dumbbell-shaped test pieces having a width of 10 mm. These test pieces were measured for tensile strength in the MD direction using a tensile tester (RTC-1310A manufactured by Orientec Corporation). Here, the distance between the chucks was set to 10 mm, and the tensile speed was set to 300 mm/minute. The measurement results are listed in Table 3.

| Table 3 | Evaluation of Printability | Evaluation of Stiffness | Evaluation of Strength |
|---|---|---|---|
| Example 3-1 | ○ | 0.32 g | 35.0 N/10 mm |
| Example 3-2 | ○ | 0.45 g | 37.8 N/10 mm |
| Example 3-3 | ○ | 0.38 g | 36.9 N/10 mm |
| Comparative Example 3-1 | × | 0.09 g | 5.4 N/10 mm |
| Comparative Example 3-2 | × | 0.11 g | 6.5 N/10 mm |

### <Example 4-1>

A biomass-derived linear low-density polyethylene (density: 0.916 g/cm³; MFR: 1.3 g/10 minutes; biomass degree: 87%; tradename: SLL118; manufactured by Braskem S.A.) was formed into a film by an inflation molding method to obtain polyethylene films, one having a thickness of 100 µm and the other having a thickness of 40 µm.

The polyethylene film having a thickness of 100 µm was stretched at a stretch ratio of 5 in the machine direction (MD) to obtain a stretched polyethylene film as a substrate having a thickness of 20 µm.

After the stretching, the stretched polyethylene film and the polyethylene film were laminated via a two-component curable urethane-based adhesive (heat seal layer; tradename: RU-77T/H-7; manufactured by Rock Paint Co., Ltd.) to obtain a laminate according to the present invention.

### <Example 4-2>

A biomass-derived linear low-density polyethylene (density: 0.916 g/cm3; MFR: 1.3 g/10 minutes; biomass degree: 87%; tradename: SLL118; manufactured by Braskem S.A.) was formed into a film by an inflation molding method to obtain polyethylene films, one having a thickness of 100 µm and the other having a thickness of 40 µm.

This polyethylene film having a thickness of 100 µm was stretched at a stretch ratio of 2.24 in the machine direction (MD) and at a stretch ratio of 2.24 in the transverse direction (TD) to obtain a stretched polyethylene film as a substrate having a thickness of 20 µm.

After the stretching, the stretched polyethylene film and the polyethylene film (heat seal layer) were laminated via a two-component curable urethane-based adhesive (tradename: RU-77T/H-7; manufactured by Rock Paint Co., Ltd.) to obtain a laminate according to the present invention.

### <Comparative Example 4-1>

A biomass-derived linear low-density polyethylene (density: 0.916 g/cm³; MFR: 1.3 g/10 minutes; biomass degree: 87%; tradename: SLL118; manufactured by Braskem S.A.) was formed into a film by an inflation molding method to obtain polyethylene films, one having a thickness of 20 µm and the other having a thickness of 40 µm.

The two polyethylene films were laminated via a two-component curable urethane-based adhesive (tradename: RU-77T/H-7; manufactured by Rock Paint Co., Ltd.) to obtain a laminate.

### <Evaluation of Printability>

An image was formed on one face of each of the stretched polyethylene films and the polyethylene films produced in the Examples and Comparative Examples by a flexographic printing method using a water flexographic ink (tradename: AQUA LIONA; manufactured by Toyo Ink Co., Ltd.). The formed images were visually observed, and the printability of the stretched polyethylene films and the polyethylene films were evaluated on the basis of the following rating criteria. The evaluation results are listed in Table 4.

### (Rating criteria)

○: the dimensional stability was good during printing, and the formed image was successfully good, generating no abrasion, bleeding, or the like.
×: the film underwent elongation and shrinkage during printing, and the formed image generated abrasion or bleeding.

### <Evaluation of Stiffness>

The stretched polyethylene films and polyethylene films produced in the Examples and Comparative Examples were formed into test pieces having a width of 15 mm, which were measured for stiffness using a loop stiffness measurement test machine (tradename: LOOP STIFFNESS TESTER; manufactured by Toyo Seiki Seisaku-sho, Ltd.). Here, the length of the loop was set to 60 mm. The measurement results are listed in Table 4.

### <Evaluation of Strength>

The stretched polyethylene films and polyethylene films produced in the Examples and Comparative Examples were formed into dumbbell-shaped test pieces having a width of 10 mm. These test pieces were measured for tensile strength in the MD direction using a tensile tester (RTC-1310A manufactured by Orientec Corporation). Here, the distance between the chucks was set to 10 mm, and the tensile speed was set to 300 mm/minute. The measurement results are listed in Table 4.

| Table 4 | Evaluation of Printability | Evaluation of Stiffness | Evaluation of Strength |
|---|---|---|---|
| Example 4-1 | ○ | 0.27 g | 28.2 N/10 mm |
| Example 4-2 | ○ | 0.31 | 30.4 N/10 mm |
| Comparative Example 4-1 | × | 0.10 g | 4.8 N/10 mm |

### <Example 5-1>

A medium-density polyethylene (density: 0.941 g/cm³; melting point: 129°C; MFR: 1.3 g/10 minutes; tradename: Elite 5538G; manufactured by The Dow Chemical Company) was formed into a film by an inflation molding method to obtain a polyethylene film having a thickness of 100 µm.

This polyethylene film was stretched at a stretch ratio of 5 in the machine direction (MD) to obtain a substrate A having a thickness of 20 µm. The substrate A was measured for the haze value, and the haze value was 6.5%.

An image was formed on one face of the substrate A by a flexographic printing method using the water flexographic ink.

As a heat seal layer, the unstretched linear low-density polyethylene film having a thickness of 40 µm was provided, and on one face of the film, an aluminium-evaporated film having a thickness of 20 nm was formed by a PVD method.

The image-formed face of the substrate A and the evaporated face of the heat seal layer were laminated via the two-component curable urethane-based adhesive to obtain a laminate according to the present invention.

Here, the adhesive layer formed by the two-component curable urethane-based adhesive had a thickness of 3.0 µm.

The ratio of polyethylene in the laminate obtained in this manner was 94 mass%.

### <Example 5-2>

A high-density polyethylene (density: 0.961 g/cm; melting point: 135°C; MFR: 0.7 g/10 minutes; tradename: HTA108; manufactured by Exxon Mobil Corporation) and the medium-density polyethylene were formed into a film by an inflation molding method to produce a polyethylene film composed of a high-density polyethylene layer, a medium-density polyethylene layer, and a high-density polyethylene layer. The high-density polyethylene layers each had a thickness of 20 µm, and the medium-density polyethylene layer had a thickness of 60 µm.

This polyethylene film was stretched at a stretch ratio of 5 in the machine direction (MD) to obtain a substrate B having a total thickness of 20 µm with the high-density polyethylene layers each having a thickness of 4 µm and with the medium-density polyethylene layer having a thickness of 12 µm. The substrate B was measured for the haze value, and the haze value was 8.9%.

An image was formed on one face of the substrate B by a flexographic printing method using the water flexographic ink.

As a heat seal layer, the unstretched linear low-density polyethylene film having a thickness of 40 µm was provided, and on one face of the film, an aluminium-evaporated film having a thickness of 20 nm was formed by a PVD method.

The image-formed face of the substrate B and the evaporated face of the heat seal layer were laminated via the two-component curable urethane-based adhesive to obtain a laminate according to the present invention.

Here, the adhesive layer formed by the two-component curable urethane-based adhesive had a thickness of 3.0 µm.

The ratio of polyethylene in the laminate obtained in this manner was 94 mass%.

### <Example 5-3>

The medium-density polyethylene was formed into a film by an inflation molding method to obtain a polyethylene film having a thickness of 100 µm.

This polyethylene film was stretched at a stretch ratio of 2.24 in the machine direction (MD) and in the transverse direction (TD) to obtain a substrate C having a thickness of 20 µm. The substrate C was measured for the haze value, and the haze value was 5.1%.

An image was formed on one face of the substrate C by a flexographic printing method using the water flexographic ink.

As a heat seal layer, the unstretched linear low-density polyethylene film having a thickness of 40 µm was provided, and on one face of the film, an aluminium-evaporated film having a thickness of 20 nm was formed by a PVD method.

The image-formed face of the substrate C and the evaporated film of the heat seal layer were laminated via the two-component curable urethane-based adhesive to obtain a laminate according to the present invention.

Here, the adhesive layer formed by the two-component curable urethane-based adhesive had a thickness of 3.0 µm.

The ratio of polyethylene in the laminate obtained in this manner was 94 mass%.

### <Example 5-4>

A laminate according to the present invention was produced in the same manner as in Example 5-1 except that the image-formed face of the substrate C and the evaporated face of the heat seal layer were adhered, as in Example 5-1, via a two-component curable adhesive (PASLIM VM001/VM102CP; manufactured by DIC Corporation) containing an isocyanate compound and a phosphoric acid-modified compound.

### <Comparative Example 5-1>

The medium-density polyethylene was formed into a film by an inflation molding method to obtain a substrate e having a thickness of 20 µm. The substrate a was measured for the haze value, and the haze value was 23.5%.

An image was formed on one face of the substrate a by a flexographic printing method using the water flexographic ink.

As a heat seal layer, the unstretched linear low-density polyethylene film having a thickness of 40 µm was provided, and on one face of the film, an aluminium-evaporated film having a thickness of 20 nm was formed by a PVD method.

The image-formed face of the substrate a and the evaporated face of the heat seal layer were laminated via the two-component curable urethane-based adhesive to obtain a laminate.

Here, the adhesive layer formed by the two-component curable urethane-based adhesive had a thickness of 3.0 µm.

The ratio of polyethylene in the laminate obtained in this manner was 94 mass%.

### <Comparative Example 5-2>

The high-density polyethylene and the medium-density polyethylene were formed into a film by an inflation molding method to produce a substrate b composed of a high-density polyethylene layer, a medium-density polyethylene layer, and a high-density polyethylene layer. The high-density polyethylene layers each had a thickness of 4 µm, and the medium-density polyethylene layer had a thickness of 12 µm. The substrate b was measured for the haze value, and the haze value was 28.8%.

An image was formed on one face of the substrate b by a flexographic printing method using the water flexographic ink.

As a heat seal layer, the unstretched linear low-density polyethylene film having a thickness of 40 µm was provided, and on one face of the film, an aluminium-evaporated film having a thickness of 20 nm was formed by a PVD method.

The image-formed face of the substrate b and the evaporated face of the heat seal layer were laminated via the two-component curable urethane-based adhesive to obtain a laminate.

Here, the adhesive layer formed by the two-component curable urethane-based adhesive had a thickness of 3.0 µm.

The ratio of polyethylene in the laminate obtained in this manner was 97 mass%.

### <Comparative Example 5-3>

A laminate was obtained in the same manner as in Example 5-1 except that the substrate A was changed to a biaxially stretched polyester film (tradename: E5100; manufactured by Toyobo Co., Ltd.) having a thickness of 12 µm. The ratio of polyethylene in the laminate obtained in this manner was 71 mass%.

### <Example 6-1>

The medium-density polyethylene was formed into a film by an inflation molding method to obtain a polyethylene film having a thickness of 100 µm.

This polyethylene film was stretched at a stretch ratio of 5 in the machine direction (MD) to obtain a substrate D having a thickness of 20 µm. The substrate D was measured for the haze value, and the haze value was 6.5%.

An image was formed on one face of the substrate D by a flexographic printing method using the water flexographic ink.

The medium-density polyethylene was formed into a film by an inflation molding method to obtain a polyethylene film having a thickness of 100 µm, and then, the film was stretched at a stretch ratio of 5 in the machine direction (MD) to obtain an interlayer A having a thickness of 20 µm. Then, on one face of the interlayer A, an aluminium-evaporated film having a thickness of 20 nm was formed by a PVD method.

The image-formed face of the substrate D was laminated on the evaporated face of the interlayer A via the two-component curable urethane-based adhesive. The adhesive layer formed by the two-component curable urethane-based adhesive had a thickness of 3.0 µm.

As a heat seal layer, the unstretched linear low-density polyethylene film having a thickness of 40 µm was provided and laminated on the non-evaporated face of the interlayer A via the two-component curable urethane-based adhesive to obtain a laminate according to the present invention.

Here, the adhesive layer formed by the two-component curable urethane-based adhesive had a thickness of 3.0 µm.

The ratio of polyethylene in the laminate obtained in this manner was 92 mass%.

### <Example 6-2>

The high-density polyethylene and the medium-density polyethylene were formed into a film by an inflation molding method to produce a polyethylene film composed of a high-density polyethylene layer, a medium-density polyethylene layer, and a high-density polyethylene layer. The high-density polyethylene layers each had a thickness of 20 µm, and the medium-density polyethylene layer had a thickness of 60 µm.

This polyethylene film was stretched at a stretch ratio of 5 in the machine direction (MD) to obtain a substrate E having a total thickness of 20 µm with the high-density polyethylene layers each having a thickness of 4 µm and with the medium-density polyethylene layer having a thickness of 12 µm. The substrate E was measured for the haze value, and the haze value was 8.9%.

An image was formed on one face of the substrate E by a flexographic printing method using the water flexographic ink.

The high-density polyethylene and the medium-density polyethylene were formed into a film by an inflation molding method to produce a polyethylene film composed of a high-density polyethylene layer, a medium-density polyethylene layer, and a high-density polyethylene layer. The high-density polyethylene layers each had a thickness of 20 µm, and the medium-density polyethylene layer had a thickness of 60 µm.

This polyethylene film was stretched at a stretch ratio of 5 in the machine direction (MD) to obtain an interlayer B having a total thickness of 20 µm with the high-density polyethylene layers each having a thickness of 4 µm and with the medium-density polyethylene layer having a thickness of 12 µm. Then, on one face of the interlayer B, an aluminium-evaporated film having a thickness of 20 nm was formed by a PVD method.

The image-formed face of the substrate E was laminated on the evaporated face of the interlayer B via the two-component curable urethane-based adhesive. The adhesive layer formed by the two-component curable urethane-based adhesive had a thickness of 3.0 µm.

As a heat seal layer, the unstretched linear low-density polyethylene film having a thickness of 40 µm was provided and laminated on the non-evaporated face of the interlayer B via the two-component curable urethane-based adhesive to obtain a laminate according to the present invention.

Here, the adhesive layer formed by the two-component curable urethane-based adhesive had a thickness of 3.0 µm.

The ratio of polyethylene in the laminate obtained in this manner was 92 mass%.

### <Example 6-3>

The medium-density polyethylene was formed into a film by an inflation molding method to obtain a polyethylene film having a thickness of 100 µm.

This polyethylene film was stretched at a stretch ratio of 2.24 in the machine direction (MD) and in the transverse direction (TD) to obtain a substrate F having a thickness of 20 µm. The substrate F was measured for the haze value, and the haze value was 5.1%.

An image was formed on one face of the substrate F by a flexographic printing method using the water flexographic ink.

The medium-density polyethylene was formed into a film by an inflation molding method to obtain a polyethylene film having a thickness of 100 µm.

This polyethylene film was stretched at a stretch ratio of 2.24 in the machine direction (MD) and in the transverse direction (TD) to obtain an interlayer C having a thickness of 20 µm. Then, on one face of the interlayer C, an aluminium-evaporated film having a thickness of 20 nm was formed by a PVD method.

The image-formed face of the substrate F was laminated on the evaporated face of the interlayer C via the two-component curable urethane-based adhesive. The adhesive layer formed by the two-component curable urethane-based adhesive had a thickness of 3.0 µm.

As a heat seal layer, the unstretched linear low-density polyethylene film having a thickness of 40 µm was provided and laminated on the non-evaporated face of the interlayer C via the two-component curable urethane-based adhesive to obtain a laminate according to the present invention.

Here, the adhesive layer formed by the two-component curable urethane-based adhesive had a thickness of 3.0 µm.

The ratio of polyethylene in the laminate obtained in this manner was 92 mass%.

### <Example 6-4>

A laminate according to the present invention was produced in the same manner as in Example 4-1 except that the image-formed face of the substrate D and the evaporated face of the interlayer A were adhered, as in Example 6-1, via a two-component curable adhesive (PASLIM VM001/VM102CP; manufactured by DIC Corporation) containing an isocyanate compound and a phosphoric acid-modified compound.

### <Comparative Example 6-1>

The medium-density polyethylene was formed into a film by an inflation molding method to obtain a substrate c having a thickness of 20 µm. The substrate c was measured for the haze value, and the haze value was 23.5%.

An image was formed on one face of the substrate c by a flexographic printing method using the water flexographic ink.

The medium-density polyethylene was formed into a film by an inflation molding method to obtain an interlayer a having a thickness of 20 µm. Then, on one face of the interlayer a, an aluminium-evaporated film having a thickness of 20 nm was formed by a PVD method.

The image-formed face of the substrate c was laminated on the evaporated face of the interlayer a via the two-component curable urethane-based adhesive. The adhesive layer formed by the two-component curable urethane-based adhesive had a thickness of 3.0 µm.

As a heat seal layer, the unstretched linear low-density polyethylene film having a thickness of 40 µm was provided and laminated on the non-evaporated face of the interlayer a via the two-component curable urethane-based adhesive to obtain a laminate.

Here, the adhesive layer formed by the two-component curable urethane-based adhesive had a thickness of 3.0 µm.

The ratio of polyethylene in the laminate obtained in this manner was 92 mass%.

### <Comparative Example 6-2>

The high-density polyethylene and the medium-density polyethylene were formed into a film by an inflation molding method to produce a substrate d composed of a high-density polyethylene layer, a medium-density polyethylene layer, and a high-density polyethylene layer. The high-density polyethylene layers each had a thickness of 4 µm, and the medium-density polyethylene layer had a thickness of 12 µm. The substrate d was measured for the haze value, and the haze value was 23.5%.

An image was formed on one face of the substrate d by a flexographic printing method using the water flexographic ink.

The high-density polyethylene and the medium-density polyethylene were formed into a film by an inflation molding method to produce an interlayer b composed of a high-density polyethylene layer, a medium-density polyethylene layer, and a high-density polyethylene layer. The high-density polyethylene layers each had a thickness of 4 µm, and the medium-density polyethylene layer had a thickness of 12 µm.

Then, on one face of the interlayer b, an aluminium-evaporated film having a thickness of 20 nm was formed by a PVD method.

The image-formed face of the substrate d was laminated on the evaporated face of the interlayer b via the two-component curable urethane-based adhesive. The adhesive layer formed by the two-component curable urethane-based adhesive had a thickness of 3.0 µm.

As a heat seal layer, the unstretched linear low-density polyethylene film having a thickness of 40 µm was provided and laminated on the non-evaporated face of the interlayer b via the two-component curable urethane-based adhesive to obtain a laminate.

Here, the adhesive layer formed by the two-component curable urethane-based adhesive had a thickness of 3.0 µm.

The ratio of polyethylene in the laminate obtained in this manner was 92 mass%.

### <Comparative Example 6-3>

A laminate was obtained in the same manner as in Example 5-1 except that the substrate and the interlayer were each changed to a biaxially stretched polyester film (tradename: E5100; manufactured by Toyobo Co., Ltd.) having a thickness of 12 µm. The ratio of polyethylene in the laminate obtained in this manner was 56 mass%.

### <Evaluation of Recyclability>

The laminates obtained in the Examples and Comparative Examples were evaluated for recyclability on the basis of the following rating criteria. The evaluation results are listed in Tables 5 and 6.

### (Rating criteria)

○: the amount of polyethylene contained in the laminate was 90 mass% or more.
×: the amount of polyethylene contained in the laminate was less than 90 mass%.

### <Evaluation of Heat-resistance>

Two test pieces, 80 mm long × 80 mm wide, were produced from each of the laminates obtained in the Examples 5-1 to 5-4, Comparative Examples 5-1 and 5-2, Examples 6-1 to 6-4, and Comparative Examples 6-1 to 6-3.

The two test pieces were superposed one on another with the heat seal layers opposed to each other, and three sides were heat-sealed at 140°C to produce a packaging bag.

The produced packaging material were visually observed, and were evaluated on the basis of the following rating criteria. The evaluation results are listed in Tables 5 and 6.

### (Rating criteria)

○: the surface of the packaging material generated no wrinkles or the like, and did not stick to the heat seal bar.
×: the surface of the packaging material generated some wrinkles or the like, and stuck to the heat seal bar, making it impossible to make a bag.

### <Evaluation of Printability>

The image formed on the substrate included in the laminate produced in each of the Examples and Comparative Examples was visually observed, and evaluated on the basis of the following rating criteria. The evaluation results are listed in Tables 5 and 6.

### (Rating criteria)

○: the dimensional stability was good during printing, and the formed image was successfully good, generating no abrasion, bleeding, or the like.
×: the film underwent elongation and shrinkage during printing, and the formed image generated abrasion or bleeding.

### <Evaluation of Stiffness>

The laminates produced in the Examples and Comparative Examples were formed into test pieces having a width of 10 mm, which were measured for stiffness using a loop stiffness measurement test machine (tradename: LOOP STIFFNESS TESTER; manufactured by Toyo Seiki Seisaku-sho, Ltd.). Here, the length of the loop was set to 60 mm. The measurement results are listed in Tables 5 and 6.

### <Strength Test>

The laminates produced in the Examples and Comparative Examples were measured for strength in a state where the laminates were pricked with a needle having a diameter of 0.5 mm using a tensile tester (tradename: RTC-1310A; manufactured by Orientec Corporation). Here, the pricking speed was set to 50 mm/minute. The measurement results are listed in Tables 5 and 6.

### <Bending Load Resistance Test>

First, the laminates obtained in the Examples and Comparative Examples were measured for oxygen permeability and water vapor permeability.

The oxygen permeability was measured under the conditions of 23°C and 90% RH using OXTRAN 2/20 manufactured by Ametek MOCON, and the water vapor permeability was measured under the conditions of 40°C and 90% RH using PERMATRAN 3/31 manufactured by Ametek MOCON.

Furthermore, the laminates obtained in the Examples and Comparative Examples were subjected to bending load (stroke: 155 mm; bending action: 440°) five times in accordance with ASTM F 392 using a Gelvo type flex-cracking tester (tradename: BE1006BE; manufactured by Tester Sangyo Co., Ltd.).

After the application of bending load, the laminates were measured for oxygen permeability and water vapor permeability.

The oxygen permeability and water vapor permeability of the laminates measured before and after the bending load resistance test are listed in Tables 5 and 6.

| Table 5 | Ratio of Polyethylen e (mass %) | Evaluation of Recyclability | Evaluation of Heat-resista nc e | Evaluation of Printability | Stiffness Test | Strength Test | Bending Load Resistance Test | | | |
|---|---|---|---|---|---|---|---|---|---|---|
| | | | | | | | Oxygen Permeability (cc/cm²·day·atm) | | Water Vapor Permeability (g/m²·day·atm) | |
| | | | | | | | before bending load | after bending load | before bending load | after bending load |
| Example 5-1 | 94 | ○ | ○ | ○ | 1.02g 6.2 N | | 0.82 | 8.35 | 1.11 | 3.58 |
| Example 5-2 | 94 | ○ | ○ | ○ | 1.12g | 6.0 N | 0.84 | 8.40 | 1.08 | 3.47 |
| Example 5-3 | 94 | ○ | ○ | ○ | 1.15g | 7.5 N | 0.67 | 8.14 | 1.02 | 3.15 |
| Example 5-4 | 94 | ○ | ○ | ○ | 1.13g | 6.0 N | 0.47 | 1.05 | 0.61 | 1.13 |
| Comparative Example 5-1 | 94 | ○ | × | × | 0.31g | 2.1 N | 0.87 | 9.11 | 1.34 | 4.78 |
| Comparative Example 5-2 | 97 | ○ | × | × | 0.32g | 2.2 N | 0.85 | 8.87 | 1.21 | 4.36 |
| Comparative Example 5-3 | 71 | × | ○ | ○ | 0.83g | 7.8 N | 0.82 | 8.45 | 1.05 | 3.41 |

| Table 6 | Ratio of Polyethylen e (mass %) | Evaluation of Recyclability | Evaluation of Heat-resistanc e | Evaluation of Printability | Stiffness Test | Strength Test | Bending Load Resistance Test | | | |
|---|---|---|---|---|---|---|---|---|---|---|
| | | | | | | | Oxygen Permeability (cc/m²·day·atm) | | Water Vapor Permeability (g/m²·day·atm) | |
| | | | | | | | before bending load | after bending load | before bending load | after bending load |
| Example 6-1 | 92 | ○ | ○ | ○ | 1.41 g | 8.6 N | 0.30 | 3.15 | 0.51 | 2.75 |
| Example 6-2 | 92 | ○ | ○ | | 1.56 g | 8.3 N | 0.32 | 3.11 | 0.48 | 2.91 |
| Example 6-3 | 92 | ○ | ○ | ○ | 1.60 g | 9.9 N | 0.23 | 3.30 | 0.45 | 2.65 |
| Example 6-4 | 92 | ○ | ○ | ○ | 1.57 g | 8.5 N | 0.25 | 0.28 | 0.43 | 0.85 |
| Comparative Example 6-1 | 92 | ○ | × | × | 0.45 g | 2.8 N | 8.63 | 10.81 | 4.24 | 5.65 |
| Example 6-2 Comparative | 92 | ○ | × | × | 0.50 g | 2.6 N | 8.34 | 11.12 | 4.31 | 5.34 |
| Comparative Example 6-3 | 56 | × | ○ | ○ | 1.20 g | 10.8 N | 0.22 | 1.58 | 0.45 | 2.11 |

### <Example 7-1>

A high-density polyethylene (density: 0.960 g/cm³; melting point: 130°C; MFR: 0.85 g/10 minutes; tradename: Elite 5960; manufactured by The Dow Chemical Company),
a medium-density polyethylene (density: 0.940 g/cm³; melting point: 126°C; MFR: 0.85 g/10 minutes; tradename: Elite 5940; manufactured by The Dow Chemical Company), and
a very-low-density polyethylene (density: 0.870 g/cm³; melting point: 55°C; MFR: 1.0 g/10 minutes; tradename: Affinity EG8100G; manufactured by The Dow Chemical Company)
were extruded, by an inflation molding method, in the form of a tubular film including a high-density polyethylene layer (12.5 µm), a medium-density polyethylene layer (43.75 µm), and a very-low-density polyethylene layer (6.25 µm) in this order from the outer side, and then, the inner very-low-density polyethylene layers were pressed to each other using a rubber roll to obtain a polyethylene film having a thickness of 125 µm and including a high-density polyethylene layer (12.5 µm), a medium-density polyethylene layer (43.75 µm), a very-low-density polyethylene layer (12.5 µm), a medium-density polyethylene layer (43.75 µm), and a high-density polyethylene layer (12.5 µm).

This polyethylene film was stretched at a stretch ratio of 5 in the machine direction (MD) to obtain a multilayer substrate A having a thickness of 25 µm.

The multilayer substrate A was measured for the haze value in accordance with JIS K 7105, and the haze value was 6.2%.

An image was formed on one face of the multilayer substrate A by a gravure printing method using an oil gravure ink (tradename: FINART; manufactured by DIC Graphics Corporation).

A linear low-density polyethylene A (density: 0.923 g/cm³; melting point: 121°C; MFR: 1.5 g/10 minutes; tradename: SP2510; manufactured by Prime Polymer Co., Ltd.),
a mixture of the linear low-density polyethylene A and a biomass-derived polyethylene (density: 0.916 g/cm³; MFR: 1.3 g/10 minutes; biomass degree: 87%; tradename: SLL118; manufactured by Braskem S.A.) (at 2:8 (by mass)), and
a linear low-density polyethylene B (density: 0.913 g/cm³; melting point: 116°C; MFR: 2.0 g/10 minutes; tradename: SP1520; manufactured by Prime Polymer Co., Ltd.) were formed into a film by an inflation molding method to produce a heat seal layer A having a thickness of 50 µm and including: a layer composed of the linear low-density polyethylene A and having a thickness of 17 µm; a layer composed of the linear low-density polyethylene A and the biomass-derived polyethylene and having a thickness of 16 µm; and a layer composed of the linear low-density polyethylene B and having a thickness of 17 µm.

The image-formed face of the multilayer substrate A and the layer of the linear low-density polyethylene A in the heat seal layer A were laminated via a two-component curable urethane-based adhesive (tradename: RU-77T/H-7; manufactured by Rock Paint Co., Ltd.) to obtain a laminate according to the present invention.

Here, the adhesive layer formed by the two-component curable urethane-based adhesive had a thickness of 3.0 µm.

The ratio of polyethylene in the laminate obtained in this manner was 95 mass%.

### <Example 7-2>

A high-density polyethylene (density: 0.960 g/cm3; melting point: 130°C; MFR: 0.85 g/10 minutes; tradename: Elite 5960; manufactured by The Dow Chemical Company),
a blend resin of the high-density polyethylene and a medium-density polyethylene (density: 0.940 g/cm3; melting point: 126°C; MFR: 0.85 g/10 minutes; tradename: Elite 5940; manufactured by The Dow Chemical Company) (at a mass ratio of 4:6),
the medium-density polyethylene, and
a very-low-density polyethylene (density: 0.870 g/cm3; melting point: 55°C; MFR: 1.0 g/10 minutes; tradename: Affinity EG8100G; manufactured by The Dow Chemical Company)
were extruded, by an inflation molding method, in the form of a tubular film including a high-density polyethylene layer (12.5 µm), a blend resin layer (12.5 µm) of a high-density polyethylene and a medium-density polyethylene, a medium-density polyethylene layer (31.25 µm), and a very-low-density polyethylene layer (6.25 µm) in this order from the outer side, and then, the inner very-low-density polyethylene layers were pressed to each other using a rubber roll to obtain a polyethylene film having a thickness of 125 µm and including a high-density polyethylene layer (12.5 µm), a blend resin layer (12.5 µm), a medium-density polyethylene layer (31.25 µm), a very-low-density polyethylene layer (12.5 µm), a medium-density polyethylene layer (31.25 µm), and a blend resin layer (12.5 µm).

This polyethylene film was stretched at a stretch ratio of 5 in the machine direction (MD) to obtain a multilayer substrate B having a thickness of 25 µm.

A laminate was produced in the same manner as in Example 7-1 except that the multilayer substrate A was changed to the multilayer substrate B. The ratio of polyethylene in the laminate obtained in this manner was 95 mass%.

### <Comparative Example 7-1>

The high-density polyethylene, the medium-density polyethylene, and the very-low-density polyethylene were extruded, by an inflation molding method, in the form of a tubular film including a high-density polyethylene layer, a medium-density polyethylene layer, and a very-low-density polyethylene layer in this order from the outer side, and then, the inner very-low-density polyethylene layers were pressed to each other using a rubber roll to obtain a multilayer substrate a having a thickness of 25 µm and including a high-density polyethylene layer (2.5 µm), a medium-density polyethylene layer (8.75 µm), a very-low-density polyethylene layer (2.5 µm), a medium-density polyethylene layer (8.75 µm), and a high-density polyethylene layer (2.5 µm).

The multilayer substrate a was measured for the haze value in accordance with JIS K 7105, and the haze value was 21.3%.

An image was formed on one face of the multilayer substrate a by a gravure printing method using the oil gravure ink.

The image-formed face of the multilayer substrate a and the layer of the linear low-density polyethylene A in the heat seal layer A were laminated via the two-component curable urethane-based adhesive to obtain a laminate.

Here, the adhesive layer formed by the two-component curable urethane-based adhesive had a thickness of 3.0 µm.

The ratio of polyethylene in the laminate obtained in this manner was 95 mass%.

### <Comparative Example 7-2>

A laminate was produced in the same manner as in Example 7-1 except that the multilayer substrate A was changed to a biaxially stretched PET film (tradename: E5100; manufactured by Toyobo Co., Ltd.) having a thickness of 12 µm.

The ratio of polyethylene in the laminate obtained in this manner was 75 mass%.

### <Example 8-1>

The multilayer substrate A was provided.

An image was formed on one face of the multilayer substrate A by a gravure printing method using an oil gravure ink (tradename: FINART; manufactured by DIC Graphics Corporation).

The linear low-density polyethylene A, the mixture of the linear low-density polyethylene A and the biomass-derived polyethylene (at 2:8 (by mass)), and the linear low-density polyethylene B were formed into a film by an inflation molding method to produce a heat seal layer B having a thickness of 100 µm and including: a layer composed of the linear low-density polyethylene A and having a thickness of 34 µm; a layer composed of the linear low-density polyethylene A and the biomass-derived polyethylene and having a thickness of 32 µm; and a layer composed of the linear low-density polyethylene B and having a thickness of 34 µm.

The image-formed face of the multilayer substrate A and the layer of the linear low-density polyethylene A in the heat seal layer B were laminated via the two-component curable urethane-based adhesive to obtain a laminate according to the present invention.

Here, the adhesive layer formed by the two-component curable urethane-based adhesive had a thickness of 3.0 µm.

The ratio of polyethylene in the laminate obtained in this manner was 97 mass%.

### <Comparative Example 8-1>

The multilayer substrate a was provided.

An image was formed on one face of the multilayer substrate a by a gravure printing method using the oil gravure ink.

The image-formed face of the multilayer substrate a and the layer of the linear low-density polyethylene A in the heat seal layer B were laminated via the two-component curable urethane-based adhesive to obtain a laminate.

Here, the adhesive layer formed by the two-component curable urethane-based adhesive had a thickness of 3.0 µm.

The ratio of polyethylene in the laminate obtained in this manner was 97 mass%.

### <Comparative Example 8-2>

A laminate was produced in the same manner as in Example 8-1 except that the multilayer substrate A was changed to the biaxially stretched PET film having a thickness of 12 µm.

The ratio of polyethylene in the laminate obtained in this manner was 86 mass%.

### <Example 9-1>

The substrate A was provided.

An image was formed on one face of the substrate A by a gravure printing method using an oil gravure ink (tradename: FINART; manufactured by DIC Graphics Corporation).

The heat seal layer A was provided, and on the linear low-density polyethylene A therein, an aluminium-evaporated film having a thickness of 20 nm was formed by a PVD method.

The image-formed face of the substrate A and the evaporated face of the heat seal layer A were laminated via the two-component curable urethane-based adhesive to obtain a laminate according to the present invention.

Here, the adhesive layer formed by the two-component curable urethane-based adhesive had a thickness of 3.0 µm.

The ratio of polyethylene in the laminate obtained in this manner was 95 mass%.

### <Example 9-2>

A laminate according to the present invention was produced in the same manner as in Example 3-1 except that the image-formed face of the substrate A and the evaporated face of the heat seal layer A were adhered, as in Example 9-1, via a two-component curable adhesive (PASLIM VM001/VM102CP; manufactured by DIC Corporation) containing an isocyanate compound and a phosphoric acid-modified compound

### <Comparative Example 9-1>

The substrate a was provided.

An image was formed on one face of the substrate a by a gravure printing method using the oil gravure ink.

The heat seal layer A was provided, and on the linear low-density polyethylene A therein, an aluminium-evaporated film having a thickness of 20 nm was formed by a PVD method.

The image-formed face of the substrate a and the evaporated face of the heat seal layer A were laminated via the two-component curable urethane-based adhesive to obtain a laminate.

Here, the adhesive layer formed by the two-component curable urethane-based adhesive had a thickness of 3.0 µm.

The ratio of polyethylene in the laminate obtained in this manner was 95 mass%.

### <Comparative Example 9-2>

A laminate was produced in the same manner as in Example 3-1 except that the substrate A was changed to the biaxially stretched PET film having a thickness of 12 µm.

The ratio of polyethylene in the laminate obtained in this manner was 76 mass%.

### <Example 10-1>

The multilayer substrate A was provided.

An image was formed on one face of the multilayer substrate A by a gravure printing method using an oil gravure ink (tradename: FINART; manufactured by DIC Graphics Corporation).

The medium-density polyethylene was formed into a film by an inflation molding method to obtain a polyethylene film having a thickness of 100 µm, and then, the film was stretched at a stretch ratio of 5 in the machine direction (MD) to obtain a stretched polyethylene film A having a thickness of 20 µm. Then, on one face of the stretched polyethylene film A, an aluminium-evaporated film having a thickness of 20 nm was formed by a PVD method to obtain an interlayer A.

The image-formed face of the multilayer substrate A was laminated on the evaporated face of the interlayer A via the two-component curable urethane-based adhesive. The adhesive layer formed by the two-component curable urethane-based adhesive had a thickness of 3.0 µm.

The heat seal layer A was provided. Then, a layer composed of the linear low-density polyethylene A in the heat seal layer A was laminated on the non-evaporated face of the interlayer A via the two-component curable urethane-based adhesive to obtain a laminate according to the present invention.

Here, the adhesive layer formed by the two-component curable urethane-based adhesive had a thickness of 3.0 µm.

The ratio of polyethylene in the laminate obtained in this manner was 93 mass%.

### <Example 10-2>

A laminate according to the present invention was produced in the same manner as in Example 4-1 except that the image-formed face of the multilayer substrate A and the evaporated face of the interlayer A were adhered, as in Example 10-1, via a two-component curable adhesive (PASLIM VM001/VM102CP; manufactured by DIC Corporation) containing an isocyanate compound and a phosphoric acid-modified compound.

### <Comparative Example 10-1>

The multilayer substrate a was provided.

An image was formed on one face of the multilayer substrate a by a gravure printing method using an oil gravure ink (tradename: FINART; manufactured by DIC Graphics Corporation).

The medium-density polyethylene was formed into a film by an inflation molding method to obtain a stretched polyethylene film a having a thickness of 20 µm. Then, on one face of the stretched polyethylene film a, an aluminium-evaporated film having a thickness of 20 nm was formed by a PVD method to obtain an interlayer a.

The image-formed face of the multilayer substrate a was laminated on the evaporated face of the interlayer a via the two-component curable urethane-based adhesive. The adhesive layer formed by the two-component curable urethane-based adhesive had a thickness of 3.0 µm.

The heat seal layer A was provided, and a layer composed of the linear low-density polyethylene A therein was laminated on the non-evaporated face of the interlayer a via the two-component curable urethane-based adhesive to obtain a laminate.

Here, the adhesive layer formed by the two-component curable urethane-based adhesive had a thickness of 3.0 µm.

The ratio of polyethylene in the laminate obtained in this manner was 93 mass%.

### <Comparative Example 10-2>

A laminate was obtained in the same manner as in Example 4-1 except that the multilayer substrate A and the stretched polyethylene film in the interlayer A were each changed to a biaxially stretched polyester film (tradename: E5100; manufactured by Toyobo Co., Ltd.) having a thickness of 12 µm. The ratio of polyethylene in the laminate obtained in this manner was 62 mass%.

### <Evaluation of Recyclability>

The laminates obtained in the Examples and Comparative Examples were evaluated for recyclability on the basis of the following rating criteria. The evaluation results are listed in Tables 7 to 10.

### (Rating criteria)

○: the amount of polyethylene contained in the laminate was 90 mass% or more.
×: the amount of polyethylene contained in the laminate was less than 90 mass%.

### <Evaluation of Heat-resistance>

Two test pieces, 80 mm long × 80 mm wide, were produced from each of the laminates obtained in the Example 7-1, Comparative Examples 7-1 and 7-2, Examples 9-1 and 9-2, Comparative Examples 9-1 and 9-2, Examples 10-1 and 10-2, and Comparative Examples 10-1 and 10-2.

The two test pieces were superposed one on another with the heat seal layers opposed to each other, and three sides were heat-sealed at 140°C to produce a packaging bag.

Two test pieces, 110 mm long × 150 mm wide, were produced from each of the laminates obtained in the Example 8-1 and Comparative Examples 8-1 and 8-2.

The two test pieces were superposed one on another with the heat seal layers opposed to each other, and two sides were heat-sealed at 140°C to form a cylindrical body portion.

Then, one test piece, 110 mm long × 150 mm wide, was produced from each of the laminates obtained in the Example 8-1 and Comparative Examples 8-1 and 8-2, and the test piece was folded in V-shape with the heat seal layer outside, and heat-sealed with the cylindrical body portion at 140°C to form a bottom portion, thus producing a stand-up pouch.

The produced packaging material were visually observed, and were evaluated on the basis of the following rating criteria. The evaluation results are listed in Tables 7 to 10.

### (Rating criteria)

○: the surface of the packaging material generated no wrinkles or the like, and did not stick to the heat seal bar.
×: the surface of the packaging material generated some wrinkles or the like, and stuck to the heat seal bar, making it impossible to make a bag.

### <Evaluation of Printability>

The image formed on the multilayer substrate included in the laminate produced in each of the Examples and Comparative Examples was visually observed, and evaluated on the basis of the following rating criteria. The evaluation results are listed in Tables 1 to 4.

### (Rating criteria)

○: the dimensional stability was good during printing, and the formed image was successfully good, generating no abrasion, bleeding, or the like.
×: the film underwent elongation and shrinkage during printing, and the formed image generated abrasion or bleeding.

### <Evaluation of Stiffness>

The laminates produced in the Examples and Comparative Examples were formed into test pieces having a width of 10 mm, which were measured for stiffness using a loop stiffness measurement test machine (tradename: LOOP STIFFNESS TESTER; manufactured by Toyo Seiki Seisaku-sho, Ltd.). Here, the length of the loop was set to 60 mm. The measurement results are listed in Tables 7 to 10.

### <Strength Test>

The laminates produced in the Examples and Comparative Examples were measured for strength in a state where the laminates were pricked with a needle having a diameter of 0.5 mm using a tensile tester (tradename: RTC-1310A; manufactured by Orientec Corporation). Here, the pricking speed was set to 50 mm/minute. The measurement results are listed in Tables 7 to 10.

### <Bending Load Resistance Test>

First, the laminates obtained in the Examples 9-1 and 9-2, Comparative Examples 9-1 and 9-2, Examples 10-1 and 10-2, and Comparative Examples 10-1 and 10-2 were measured for oxygen permeability and water vapor permeability.

The oxygen permeability was measured under the conditions of 23°C and 90% RH using OXTRAN 2/20 manufactured by Ametek MOCON, and the water vapor permeability was measured under the conditions of 40°C and 90% RH using PERMATRAN 3/31 manufactured by Ametek MOCON.

Furthermore, the laminates obtained in the Examples 9-1 and 9-2, Comparative Examples 9-1 and 9-2, Examples 10-1 and 10-2, and Comparative Examples 10-1 and 10-2 were subjected to bending load (stroke: 155 mm; bending action: 440°) five times in accordance with ASTM F 392 using a Gelvo type flex-cracking tester (tradename: BE1006BE; manufactured by Tester Sangyo Co., Ltd.).

After the application of bending load, the laminates were measured for oxygen permeability and water vapor permeability.

The oxygen permeability and water vapor permeability of the laminates measured before and after the bending load resistance test are listed in Tables 9 and 10.

| Table 7 | Amount of Polyethylene (mass %) | Evaluation of Recyclability | Evaluation of Heat-resistance | Evaluation of Printability | Stiffness Test | Strength Test |
|---|---|---|---|---|---|---|
| Example 7-1 | 95 | ○ | ○ | ○ | 1.21 g | 7.1 N |
| Example 7-2 | 95 | ○ | ○ | ○ | 1.25 g | 7.4 N |
| Comparative Example 7-1 | 95 | ○ | × | × | 0.51 g | 2.5 N |
| Comparative Example 7-2 | 76 | × | ○ | ○ | 0,80 g | 3.6 N |

| Table 8 | Amount of Polyethylene (mass %) | Evaluation of Recyclability | Evaluation of Heat-resistance | Evaluation of Printability | Stiffness Test | Strength Test |
|---|---|---|---|---|---|---|
| Example 8-1 | 97 | ○ | ○ | ○ | 15.2 g | 9.4 N |
| Comparative Example 8-1 | 97 | ○ | × | × | 6.5 g | 4.2 N |
| Comparative Example 8-2 | 86 | × | ○ | ○ | 11.8 g | 6.5 N |

| Table 9 | Ratio of Polyethylene (mass %) | Evaluation of Recyclability | Evaluation of Heat-resistanc e | Evaluation of Printability | Stiffness Test | Strength Test | Bending Load Resistance Test | | | |
|---|---|---|---|---|---|---|---|---|---|---|
| | | | | | | | Oxygen Permeability (cc/m²·day·atm) | | Water Vapor Permeability (g/m²·day·atm) | |
| | | | | | | | before bending load | after bending load | before bending load | after bending load |
| Example 9-1 | 95 | ○ | ○ | ○ | 1.08 g | 6.9 N | 0.88 | 8.54 | 1.23 | 3.81 |
| Example 9-2 | 95 | ○ | ○ | ○ | 1.08 g | 7.0 N | 0.65 | 1.21 | 0.72 | 1.25 |
| Comparative Example 9-1 | 95 | ○ | × | × | 0.48 g | 2.3 N | 0.92 | 9.28 | 1.42 | 4.94 |
| Comparative Example 9-2 | 76 | × | ○ | ○ | 0.76 g | 3.6 N | 0.87 | 8.53 | 1.25 | 3.62 |

| Table 10 | Ratio of Polyethylene (mass %) | Evaluation of Recyclability | Evaluation of Heat-resistance | Evaluation of Printability | Stiffness Test | Strength Test | Bending Load Resistance Test | | | |
|---|---|---|---|---|---|---|---|---|---|---|
| | | | | | | | Oxygen Permeability (cc/m²·day·atm) | | Water Vapor Permeability (g/m²·day·atm) | |
| | | | | | | | before bending load | after bending load | before bending load | after bending load |
| Example 10-1 | 93 | ○ | ○ | ○ | 1.45 g | 8,9 N | 0.31 | 3.24 | 0.53 | 2.85 |
| Example 10-2 | 93 | ○ | ○ | ○ | 1.47 g | 9.0 N | 0.24 | 0.30 | 0.48 | 0.91 |
| Comparative Example 10-1 | 93 | ○ | × | × | 0.46 g | 2.8 N | 8.26 | 10.47 | 4.31 | 5.54 |
| Comparative Example 10-2 | 62 | × | ○ | ○ | 1.23 g | 9.2 N | 0.30 | 1.74 | 0.48 | 2.20 |

### Reference Signs List

10: Laminate, 20: Substrate, 30: Heat seal layer, 40: Interlayer, 50: Adhesive layer, 60: High-density polyethylene layer, 70: Medium-density polyethylene layer, 80: Low-density polyethylene layer, 90: Medium-density polyethylene layer, 100: High-density polyethylene layer, 110: Packaging bag, 120. Stand-up pouch, 130: Body portion, 140: Bottom portion

## Claims

1. A laminate comprising at least a substrate and a heat seal layer, wherein
the substrate and the heat seal layer are composed of the same material,
the substrate is treated by stretching, and
the same material is polyethylene.

2. The laminate according to claim 1, wherein the substrate comprises an evaporated film on at least one face thereof.

3. The laminate according to claim 1 or 2, comprising an adhesive layer between the substrate and the heat seal layer.

4. The laminate according to any one of claims 1 to 3, wherein the substrate comprises an aluminium-evaporated film and
the laminate comprises, between the substrate and the heat seal layer, an adhesive layer composed of a cured product of a resin composition comprising a polyester polyol, an isocyanate compound, and a phosphoric acid-modified compound.

5. The laminate according to any one of claims 1 to 4, wherein at least one of the substrate and the heat seal layer comprises a biomass-derived polyethylene.

6. The laminate according to any one of claims 1 to 5, wherein an amount of polyethylene contained in the whole laminate is 90 mass% or more.

7. The laminate according to any one of claims 1 to 6, wherein the laminate is used for a packaging material(s).

8. A packaging material produced using the laminate according to any one of claims 1 to 7.

9. A packaging bag produced using the laminate according to any one of claims 1 to 7,
wherein the heat seal layer has a thickness of 20 µm or more and 60 µm or less.

10. A stand-up pouch produced using the laminate according to any one of claims 1 to 7,
wherein the heat seal layer has a thickness of 50 µm or more and 200 µm or less.

11. A multilayer substrate comprising a five-layer coextruded stretched film comprising:
a high-density polyethylene layer;
a medium-density polyethylene layer;
a low-density polyethylene layer, linear low-density polyethylene layer, or very-iow-density polyethylene layer;
a medium-density polyethylene layer; and
a high-density polyethylene layer.

12. The multilayer substrate according to claim 11, wherein the high-density polyethylene layer has a thickness of 1 µm or more and 20 µm or less.

13. The multilayer substrate according to claim 11 or 12, wherein the medium-density polyethylene layer has a thickness of 1 µm or more and 30 µm or less.

14. The multilayer substrate according to any one of claims 11 to 13, wherein the low-density polyethylene layer, the linear low-density polyethylene layer, or the very-low-density polyethylene layer has a thickness of 1 µm or more and 10 µm or less.

15. A multilayer substrate comprising a seven-layer coextruded stretched film comprising:
a high-density polyethylene layer;
a medium-density polyethylene layer;
a blend resin layer of a high-density polyethylene and a medium-density polyethylene;
a low-density polyethylene layer, linear low-density polyethylene layer, or very-low-density polyethylene layer;
a medium-density polyethylene layer;
a blend resin layer of a high-density polyethylene and a medium-density polyethylene; and
a high-density polyethylene layer.
